# EUROPEAN PATENT APPLICATION

(11) **EP 4 704 464 A1**
(43) Date of publication of application: **04.03.2026**
(21) Application number: 23934342.9
(22) Date of filing: 23.04.2023
(51) Int. Cl.: H04W 36/08, H04W 36/24, H04W 36/38

(54) **CELL SWITCHING METHOD, TERMINAL DEVICE AND NETWORK DEVICE**

(71) Applicant: Quectel Wireless Solutions Co., Ltd., Shanghai 201601 (CN)
(72) Inventor: ZHAO, Zheng, Shanghai 201601 (CN); LYU, Ling, Shanghai 201601 (CN); YANG, Zhongzhi, Shanghai 201601 (CN)
(74) Representative: Fish & Richardson P.C.
(86) International application number: PCT/CN2023/090119
(87) International publication number: WO 2024/221136

(57) **Abstract**

The present application provides a cell handover method, a terminal device and a network device, which help to avoid the congestion caused by a large number of terminal devices accessing a target cell in a centralized manner. The method comprises: receiving, by a terminal device, a handover command sent by a source network device, wherein the handover command is configured to indicate that the terminal device can switch from a source cell corresponding to the source network device to a first time window of a target cell corresponding to a target network device; and performing, by the terminal device, cell handover according to the first time window.

## Description

### FIELD

The present disclosure relates to the fields of communication technologies, and more specifically, to a cell handover method, a terminal device, and a network device.

### BACKGROUND

In certain communication systems, such as non-terrestrial network (NTN) systems, during the cell handover process, the source network device may determine the target cell in advance and send a handover command to the terminal device to avoid transmitting a large number of handover commands in a short period before the source cell is out of service. After receiving the advance handover command, how the terminal device executes the cell handover is an issue that needs to be addressed.

### SUMMARY

The present disclosure provides a cell handover method, a terminal device, and a network device. Various aspects of the embodiments of the present disclosure are described below.

In a first aspect, a cell handover method is provided, including: receiving, by a terminal device, a handover command sent by a source network device, wherein the handover command is configured to indicate a first time window during which the terminal device may switch from a source cell corresponding to the source network device to a target cell corresponding to a target network device; wherein the terminal device executes the cell handover according to the first time window.

In a second aspect, a cell handover method is provided, including: sending, by a source network device, a handover command to a terminal device, wherein the handover command is configured to indicate a first time window during which the terminal device may switch from a source cell corresponding to the source network device to a target cell corresponding to a target network device; wherein the first time window is used by the terminal device to execute the cell handover.

In a third aspect, a cell handover method is provided, including: sending, by a target network device, indication information to a source network device, wherein the indication information is used by the source network device to determine a handover command, and the handover command is configured to indicate a first time window during which a terminal device may switch from a source cell corresponding to the source network device to a target cell corresponding to the target network device; wherein the first time window is used by the terminal device to execute the cell handover.

In a fourth aspect, a terminal device is provided, including: a receiving unit, configured to receive a handover command sent by a source network device, wherein the handover command is configured to indicate a first time window during which the terminal device may switch from a source cell corresponding to the source network device to a target cell corresponding to a target network device; and an execution unit, configured to execute the cell handover according to the first time window.

In a fifth aspect, a network device is provided, the network device being a source network device, including: a sending unit, configured to send a handover command to a terminal device, wherein the handover command is configured to indicate a first time window during which the terminal device may switch from a source cell corresponding to the source network device to a target cell corresponding to a target network device; wherein the first time window is used by the terminal device to execute the cell handover.

In a sixth aspect, a network device is provided, the network device being a target network device, including: a sending unit, configured to send indication information to a source network device, wherein the indication information is used by the source network device to determine a handover command, and the handover command is configured to indicate a first time window during which a terminal device may switch from a source cell corresponding to the source network device to a target cell corresponding to the target network device; wherein the first time window is used by the terminal device to execute the cell handover.

In a seventh aspect, a communication apparatus is provided, including a memory and a processor, wherein the memory is configured to store a program, and the processor is configured to execute the program in the memory to perform the method according to any one of the first aspect to the third aspect.

In an eighth aspect, an apparatus is provided, including a processor configured to execute a program from a memory to perform the method according to any one of the first aspect to the third aspect.

In a ninth aspect, a chip is provided, including a processor configured to execute a program from a memory to cause a device equipped with the chip to perform the method according to any one of the first aspect to the third aspect.

In a tenth aspect, a computer-readable storage medium is provided, storing a program that causes a computer to perform the method according to any one of the first aspect to the third aspect.

In an eleventh aspect, a computer program product is provided, including a program that causes a computer to perform the method according to any one of the first aspect to the third aspect.

In a twelfth aspect, a computer program is provided, causing a computer to perform the method according to any one of the first aspect to the third aspect.

In the embodiments of the present disclosure, the terminal device determines the first time window during which a connection may be established with the target cell based on the handover command sent by the source network device. The terminal device executes the cell handover within the first time window, which helps to avoid congestion caused by a large number of terminal devices accessing the target cell in a centralized manner.

### BRIEF DESCRIPTION OF THE DRAWINGS

FIG. 1 shows a wireless communication system according to an exemplary embodiment of the present disclosure.
FIG. 2 shows two deployment modes of an NTN system according to an exemplary embodiment of the present disclosure.
FIG. 3 is a schematic diagram of a terrestrial cell handover process.
FIG. 4 is a schematic flowchart of a cell handover method according to an exemplary embodiment of the present disclosure.
FIG. 5 is a schematic diagram of a possible implementation of the method shown in FIG. 4.
FIG. 6 is a schematic flowchart of another cell handover method according to an exemplary embodiment of the present disclosure.
FIG. 7 is a schematic diagram of a possible implementation of the method shown in FIG. 6.
FIG. 8 is a schematic flowchart of another possible implementation of the method shown in FIG. 6.
FIG. 9 is a schematic structural diagram of a terminal device according to an exemplary embodiment of the present disclosure.
FIG. 10 is a schematic structural diagram of a network device according to an exemplary embodiment of the present disclosure.
FIG. 11 is a schematic structural diagram of another network device according to an exemplary embodiment of the present disclosure.
FIG. 12 is a schematic structural diagram of a communication apparatus according to an exemplary embodiment of the present disclosure.

### DETAILED DESCRIPTION

The technical solutions in the embodiments of the present disclosure will be described below with reference to the accompanying drawings in the embodiments of the present disclosure. Apparently, the described embodiments are some rather than all of the embodiments of the present disclosure. For the embodiments of the present disclosure, all other embodiments obtained by a person of ordinary skill in the art without creative efforts fall within the scope of protection of the present disclosure.

The embodiments of the present disclosure may be applied to various communication systems. For example, the embodiments of the present disclosure may be applied to a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, an NTN system, a universal mobile telecommunication system (UMTS), a wireless local area network (WLAN), wireless fidelity (WiFi), and a 5th generation (5G) communication system. The embodiments of the present disclosure may be further applied to another communication system, such as a future communication system. The future communication system may be, for example, a 6th generation (6G) mobile communication system, or a satellite communication system.

Traditional communication systems support a limited number of connections and are also easy to implement. However, with the development of communication technologies, communication systems may support not only traditional cellular communication but also one or more other types of communication. For example, the communication system may support one or more of the following communication: device-to-device (D2D) communication, machine-to-machine (M2M) communication, machine-type communication (MTC), enhanced machine-type communication (eMTC), vehicle-to-vehicle (V2V) communication, vehicle-to-everything (V2X) communication, *etc.* The embodiments of the present disclosure may also be applied to communication systems that support the foregoing communication methods.

The communication system in the embodiments of the present disclosure may be applied to a carrier aggregation (CA) scenario, a dual connectivity (DC) scenario, or a standalone (SA) networking scenario.

The communication system in the embodiments of the present disclosure may be applied to an unlicensed spectrum. The unlicensed spectrum may also be considered as a shared spectrum. Alternatively, the communication system in the embodiments of the present disclosure may be applied to a licensed spectrum. The licensed spectrum may also be considered as a dedicated spectrum.

The embodiments of the present disclosure may be applied to a terrestrial network (TN) system or an NTN system. For example, the NTN system may include a 4G-based NTN system, an NR-based NTN system, an internet of things (IoT)-based NTN system, and a narrowband internet of things (NB-IoT)-based NTN system.

The communication system may include one or more terminal devices. The terminal device mentioned in the embodiments of the present disclosure may also be referred to as a user equipment (UE), an access terminal, a subscriber unit, a subscriber station, a mobile site, a mobile station (MS), a mobile terminal (MT), a remote station, a remote terminal, a mobile device, a user terminal, a terminal, a wireless communication device, a user agent, or a user apparatus.

In some embodiments, the terminal device may be a station (ST) in a WLAN. In some embodiments, the terminal device may be a cellular phone, a cordless phone, a session initiation protocol (SIP) phone, a wireless local loop (WLL) station, a personal digital assistant (PDA) device, a handheld device with wireless communication capabilities, a computing device or any other processing device connected to a wireless modem, a vehicle-mounted device, a wearable device, a terminal device in a next generation communication system (e.g., an NR system), a terminal device in a future evolved public land mobile network (PLMN).

In some embodiments, the terminal device may be a device that provides a user with voice and/or data connectivity. For example, the terminal device may be a handheld device or a vehicle-mounted device with wireless connectivity. In some specific examples, the terminal device may be a mobile phone, a tablet computer (Pad), a laptop computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, *etc.*

In some embodiments, the terminal device may be deployed on land. For example, the terminal device may be deployed indoors or outdoors. In some embodiments, the terminal device may be deployed on water, for example, on a ship. In some embodiments, the terminal device may be deployed in the air, for example, on an airplane, a balloon, and a satellite.

In addition to the terminal device, the communication system may further include one or more network devices. The network device in the embodiments of the present disclosure may be a device for communicating with the terminal device. The network device may also be referred to as an access network device or a wireless access network device. The network device may be, for example, a base station. The network device in the embodiments of the present disclosure may be a radio access network (RAN) node (or device) that connects the terminal device to a wireless network. The base station may broadly cover various names as follows, or may be interchangeable with one of the following names, such as a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a radio node, an access point (AP), a transmission node, a transceiver node, a base band unit (BBU), a remote radio unit (RRU), an active antenna unit (AAU), a remote radio head (RRH), a central unit (CU), a distributed unit (DU), or a positioning node. The base station may be a macro base station, a micro base station, a relay node, a donor node, or the like, or a combination thereof. The base station may also be a communication module, a modem, or a chip disposed in the device or apparatus described above. The base station may also be a mobile handover center, a device that functions as a base station in D2D, V2X, and M2M communications, a network-side device in a 6G network, or a device that functions as a base station in a future communication system. The base station may support networks of the same or different access technologies. The specific technology and specific device form used by the network device are not limited in the embodiments of the present disclosure.

The base station may be fixed or mobile. For example, a helicopter or drone may be configured to act as a mobile base station, and one or more cells may move based on the location of the mobile base station. In other examples, a helicopter or drone may be configured to serve as a device for communicating with another base station.

In some deployments, the network device in the embodiments of the present disclosure may be a CU or a DU, or the network device includes a CU and a DU. The gNB may further include an AAU.

As an example rather than a limitation, in the embodiments of the present disclosure, the network device may have a mobile feature, for example, the network device may be a mobile device. In some embodiments of the present disclosure, the network device may be a satellite or a balloon station. In some embodiments of the present disclosure, the network device may also be a base station located on land, water, *etc.*

In the embodiments of the present disclosure, the network device may provide services for a cell, and the terminal device communicates with the network device by using a transmission resource (e.g., a frequency domain resource or a spectrum resource) used by the cell. The cell may be a cell corresponding to the network device (*e.g.,* a base station). The cell may belong to a macro base station or belong to a base station corresponding to a small cell. The small cell herein may include: a metro cell, a micro cell, a pico cell, a femto cell, *etc.* These small cells feature small coverage and low transmission power, and are suitable for providing a high-speed data transmission service.

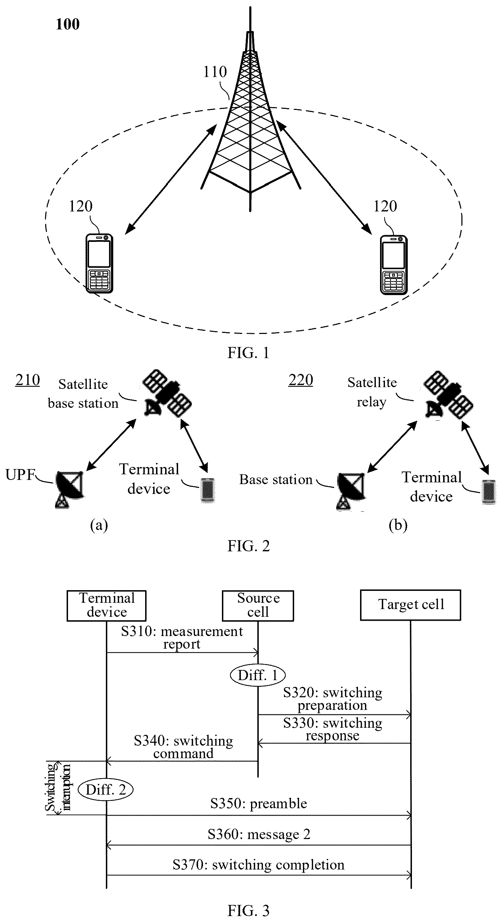

Exemplarily, FIG. 1 is a schematic diagram of an architecture of a communication system according to an embodiment of the present disclosure. As shown in FIG. 1, a communication system 100 may include a network device 110, and the network device 110 may be a device that communicates with a terminal device 120 (or referred to as a communication terminal or a terminal). The network device 110 may provide communication coverage for a specific geographic area, and may communicate with a terminal device located within the coverage area.

FIG. 1 exemplarily shows one network device and two terminal devices. In some embodiments of the present disclosure, the communication system 100 may include a plurality of network devices, and other numbers of terminal devices may be included within the coverage area of each network device, which is not limited in the embodiments of the present disclosure.

In the embodiments of the present disclosure, the wireless communication system shown in FIG. 1 may further include other network entities such as a mobility management entity (MME) or an access and mobility management function (AMF), which is not limited in the embodiments of the present disclosure.

It should be understood that the device having a communication function in a network/system in the embodiments of the present disclosure may be referred to as a communication device. Taking the communication system 100 shown in FIG. 1 is used as an example, the communication device may include a network device 110 and a terminal device 120 having a communication function, and the network device 110 and the terminal device 120 may be specific devices described above, which will not be repeated herein; the communication device may further include other devices in the communication system 100, such as a network controller, a mobility management entity, and other network entities, which is not limited in the embodiments of the present disclosure.

For ease of understanding, some related technical knowledge involved in the embodiments of the present disclosure is first described. The following related technologies, as optional solutions, may be arbitrarily combined with the technical solutions of the embodiments of the present disclosure, all of which fall within the scope of protection of the embodiments of the present disclosure. The embodiments of the present disclosure include at least part of the following contents.

With the development of communication technologies, the communication system will have a market potential for gradually integrating a satellite and a terrestrial network infrastructure. For example, as 5G networks become increasingly popular and saturated in urban areas, the introduction of NTNs as described above aims to enhance the utilization and coverage of 5G networks, enabling users and IoT devices in remote areas, deserts, and oceanic areas to access 5G networks.

NTNs utilize non-terrestrial equipment such as satellites and high-altitude platforms to relay wireless signals. Compared to terrestrial cells, the use of NTNs can reduce costs and achieve thin coverage over vast areas with low traffic. Taking satellites as an example, due to their high orbital altitudes ranging from more than 600 kilometers to 35,000 kilometers, a single satellite can cover a large area of the earth's surface, and a small number of satellites can achieve global coverage.

NTN networks typically have two deployment modes. Still taking satellites as an example, the first deployment mode involves installing the network device (e.g., a base station) on the satellite, while the second deployment mode involves installing the network device on the ground. In the first deployment mode, the network device is connected to the terrestrial terminal device (e.g., UE) and the user plane function (UPF) of the core network, respectively. In the second deployment mode, the satellite acts merely as an amplifier, and the wireless signal between the network device and the terminal device is transmitted through the amplifier, thereby enhancing the signal.

For ease of understanding, the following provides examples with reference to the two deployment modes shown in FIG. 2(a) and FIG. 2(b). Specifically, FIG. 2(a) shows the deployment mode where the network device is installed on the satellite, while FIG. 2(b) shows the deployment mode where the network device is installed on the ground.

Referring to FIG. 2, the NTN system 210 shown in FIG. 2(a) includes a satellite base station, a UPF, and a terminal device, while the NTN system 220 shown in FIG. 2(b) includes a satellite repeater, a base station, and a terminal device. In FIG. 2(a), the base station is installed on the satellite, while in FIG. 2(b), the satellite serves only as a repeater. In FIG. 2(a), the terrestrial equipment connected to the satellite is the UPF of the core network, while in FIG. 2(b), the terrestrial equipment is the base station.

In the two deployment modes shown in FIG. 2, the NTN system may include a plurality of network devices, and other numbers of terminal devices may be included within the coverage area of each network device, which is not limited in the embodiments of the present disclosure.

Since communication satellites is required to continuously move along a fixed orbit, the terminal device is required to switch from connecting to one satellite to connecting to another satellite after a certain period of time. This applies to both mobile and stationary terminal devices. This is because the movement speed of the satellite (e.g., 7.56 km/s) is very high, making the movement speed of the terminal device (less than 500 km/h) almost negligible in comparison. In some embodiments, the terminal device handover its connected satellites is equivalent to handover network devices. For example, in the first deployment mode shown in FIG. 2(a), where the base station is installed on the satellite, the terminal device handover satellites means handover base stations, and the process is a handover process. In some embodiments, the terminal device handover its connected satellites does not mean handover network devices, *i.e.,* it does not mean handover cells. In such cases, the terminal device may or may not switch cells. For example, in the second deployment mode shown in FIG. 2(b), where the base station is installed on the ground, the process of the terminal device handover satellites may or may not be a handover process.

For NTN systems, the cell handover process differs from the terrestrial cell handover process mainly in the following two aspects.

First, for terrestrial cells, the source cell is required to select the target cell for handover based on the measurement report from the terminal device. Therefore, the source cell must wait until it receives the measurement report before deciding which cell to select as the target cell. This design idea is due to the fact the terminal device performs cell handover because of the movement of the terminal device itself. Since the movement direction and speed of the terminal device are unpredictable by the source cell, the source cell must select the cell with the strongest signal as the target cell based on the measurement results of the wireless signals from various cells by the terminal device. In NTN systems where satellites serve as aerial platforms, the primary reason for cell handover is the movement of the satellite, not the movement of the terminal device. Since the movement trajectory of the satellite is predictable, the source base station may determine which cell to select as the target cell earlier. Furthermore, since the movement speed of the terminal device is negligible compared to that of the satellite, the source base station may select the target cell without considering the measurement results from the terminal device. In other words, the source cell is not required to wait for the measurement report from the terminal device, but instead predicts the next satellite that will cover the terminal device based on the pre-acquired satellite orbit and the geographical location of the terminal device, and selects it as the target cell for the terminal device.

Second, for terrestrial cells, the terminal device will establish a connection with the target cell immediately after receiving the handover command. This is because, by the time the source cell sends the handover command, the wireless signal between the source cell and the terminal device is already very poor, and the terminal device must establish a wireless connection with the target cell as soon as possible. For satellite cells, the source base station may select the target cell earlier and notify the terminal device. Therefore, the terminal device is not required to establish a wireless connection with the target cell immediately after receiving the handover command.

For ease of understanding, a comparison between the cell handover process in NTNs and the terrestrial cell handover process is described below with reference to the terrestrial cell handover process shown in FIG. 3.

Referring to FIG. 3, the handover process primarily involves interactions among the terminal device, the source cell, and the target cell. The source cell is the cell corresponding to the network device serving the terminal device before the handover process. The target cell is the cell corresponding to the network device serving the terminal device after the handover process.

In step S310, the terminal device sends a measurement report to the source cell. For the handover process in NTN systems, the terminal device may or may not send a measurement report to the source cell. In cases where the terminal device does not send a measurement report, the source base station may determine the target cell for handover and the timing of handover based on the satellite orbit and the geographical location of the terminal device.

In step S320, the source cell sends a handover preparation message to the target cell. In the terrestrial cell handover process, the source cell sends a handover request to the target cell based on the measurement report sent by the terminal device. In NTNs, the source cell is not required to wait for the measurement report from the terminal device. As shown in Difference 1 in FIG. 3, the source cell in NTN systems may determine the target cell based on the movement trajectory of the satellite and initiate a handover request to the target cell.

In step S330, the target cell sends a handover response to the source cell.

In step S340, based on the handover response from the target cell, the source cell sends a handover command to the terminal device.

In step S350, the terminal device sends a preamble to the target cell. In the terrestrial cell handover process, the terminal device typically sends a preamble immediately after receiving the handover command in step S340. This is because there is a continuous flow of user data that is required to be transmitted between the terminal device and the network device, so a connection should be established with the target cell as soon as possible to continue data transmission. In other words, the "handover interruption" shown in FIG. 3 in the terrestrial cell handover process should be as short as possible. In NTNs, first, the handover command in step S340 may be sent in advance, and the wireless signal between the terminal device and the source cell is good when the terminal device receives the handover command. Second, since NTNs typically serve "users with low data traffic", the terminal device is not in a hurry to establish a connection with the target cell because there may not necessarily be user data to be transmitted immediately after the terminal device switches to the target cell. Therefore, the terminal device is not required to trigger the access process with the target cell immediately after receiving the handover command. As shown in Difference 2 in FIG. 3, the handover process in NTN systems may tolerate the "handover interruption" between step S340 and step S350.

In step S360, the target cell sends message 2 (msg2) of the random access process to the terminal device.

In step S370, the terminal device sends a handover completion message to the target cell.

As described above, in NTN systems, the handover command from the source cell is typically sent in advance, and the terminal device may temporarily not establish a connection with the target cell after receiving the handover command. In some embodiments, the terminal device may wait until there is downlink data to be transmitted before establishing a connection with the target cell. For example, when there is downlink data, the target network device may notify the terminal device for access via a physical downlink control channel (PDCCH) order. In some embodiments, if there is uplink data to be transmitted, the terminal device may proactively initiate random access to establish a connection with the target cell.

For a terminal device that does not immediately establish a connection with the target cell, how to execute the handover command is an issue that needs to be addressed. In other words, how the terminal device determines the timing of establishing a connection with the target cell in the absence of uplink data or downlink control commands is also an issue that needs to be addressed. Furthermore, how to process the information related to the source cell and/or the target cell after receiving the handover command and before establishing a connection with the target cell is also an issue that needs to be considered.

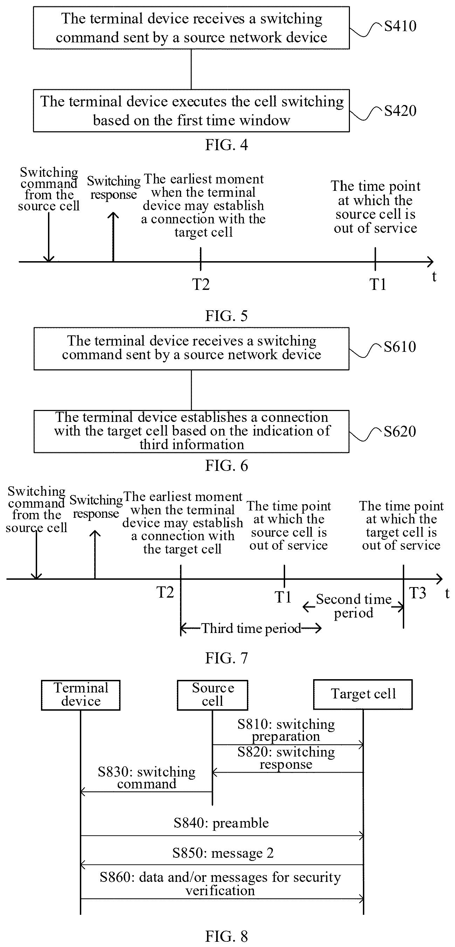

To address some of the above issues, the embodiments of the present disclosure propose a cell handover method. Through the method, the terminal device determines a time range during which a connection may be established with the target cell based on a first time window indicated by the handover command. The terminal device may select the timing of handover within the time range, thereby avoiding the situation where a large number of terminal devices access the target cell in a centralized manner. For ease of understanding, the method proposed in the embodiments of the present disclosure is described in detail below with reference to FIG. 4.

Referring to FIG. 4, in step S410, the terminal device receives a handover command sent by a source network device.

The terminal device is any one of the terminal devices described above. In some embodiments, the terminal device is a communication device serving the satellite in NTN systems. In some embodiments, the terminal device is a communication device with a low data transmission rate.

The source network device (source base station) is a communication device serving the terminal device at the current moment. The source network device may be a network device moving relative to the terminal device. In some embodiments, the source network device may be a satellite in NTN systems. For example, the source network device may be a non-geostationary earth orbit (NGEO) satellite. In some embodiments, the source network device may be a non-satellite mobile network device. For example, the source network device may be a base station installed on a low-altitude aircraft.

In some embodiments, the source network device may determine on its own a next network device serving the terminal device, *i.e.,* a target network device (target base station). As described above, in the cell handover process in NTN systems, the source network device may determine the target network device corresponding to the terminal device without the measurement report from the terminal device. Typically, the target network device is a network device with a predictable movement trajectory. For example, the target network device may be a satellite in NTN systems. The source network device may determine the target network device serving the terminal device based on ephemeris information. For another example, the target network device may be a non-satellite mobile network device. The source network device may determine the target network device serving the terminal device based on preset parameters.

The handover command sent by the source network device to the terminal device is configured to instruct the terminal device to switch from the source cell corresponding to the source network device to the target cell corresponding to the target network device. In some embodiments, after determining the target network device, the source network device sends a handover preparation message to the target network device. After receiving the handover response from the target network device, the source network device sends the handover command to the terminal device.

The handover command sent by the source network device is further configured to indicate a first time window for the terminal device to switch from the source cell to the target cell. The first time window is a time range during which the terminal device may execute the cell handover. In other words, after receiving the handover command, the terminal device may establish a connection with the target cell within the first time window.

The handover command sent by the source network device may also be determined based on indication information sent by the target network device. In other words, the source network device may receive indication information from the target network device before sending the handover command. The indication information may be the handover response from the target network device or related information sent by the target network device to instruct the terminal device to establish a connection with the target cell. For example, the indication information may be configured to indicate the first time window in the handover command.

The first time window indicated by the handover command may be determined by the source network device or by the target network device.

In some embodiments, the handover preparation message sent by the source network device may include an estimated first time window for the terminal device to switch into the target cell. The first time window is a time range estimated by the source network device during which the terminal device may switch from the source cell to the target cell. By sending the handover preparation message, the source network device confirms with the target cell whether the estimated first time window is feasible. For example, in NTN systems, the source network device may estimate the first time window corresponding to the terminal device based on the satellite orbit and the geographical location of the terminal device.

In some embodiments, the handover preparation message sent by the source network device may include a first time point at which the source cell stops serving the terminal device, and the target cell may determine a first time window based on the first time point. The target network device may notify the source network device of the first time window by sending a handover response.

The start point of the first time window is a start time point at which the terminal device may establish a connection with the target cell. In other words, the start time point is a start moment when the terminal device may execute the cell handover.

The end point of the first time window may be determined based on the first time point at which the source cell stops serving the terminal device. It should be noted that the end point of the first time window is not necessarily the first time point. For example, in NTN systems serving low-rate services, the end point of the first time window may be after the first time point. In other words, the terminal device may establish a connection with the target cell after the source cell is out of service.

The parameter information of the first time window may be represented in various ways. As a possible implementation, the information of the first time window may be represented by the start point of the time-domain position and the length of the first time window. As a possible implementation, the information of the first time window may be represented by the start point and the end point of the time-domain position. As a possible implementation, the information of the first time window may be represented by the end point of the time-domain position and the length of the first time window.

In some embodiments, the handover command received by the terminal device may indicate a start time point at which the terminal device may switch from the source cell to the target cell. The start time point is also the start moment of the first time window. In cases where the handover command is sent in advance, the start time point may indicate to the terminal device "from which moment the target cell may be accessed". Specifically, starting from the moment corresponding to the start time point, the terminal device may establish a connection with the target cell. Exemplarily, if receiving the handover command in advance, the terminal device may read the indication of "the earliest moment at which the target cell may be accessed" in the handover command, thereby determining the start moment at which the cell handover may be executed.

In some embodiments, the start time point of the first time window may be determined by the source network device based on the movement information of the target network device and the geographical location of the terminal device. For example, when the target network device is a base station providing services via a satellite, the source network device may determine the moment when the terminal device may establish a connection with the target cell based on the ephemeris information of the target cell and the geographical location of the terminal device.

In some embodiments, the start time point of the first time window may be determined by the target network device. As an implementation, the source network device sends a suggestion regarding the start time point to the target network device via the handover preparation message. After making a decision based on the suggestion, the target network device notifies the source network device of the final confirmed start time point via the handover response. The source network device indicates the start time point of the first time window to the terminal device via the handover command. As another implementation, the source network device may not send a suggestion to the target network device, and the target network device directly determines the start time point of the first time window. The source network device sends a handover command to the terminal device based on the parameters notified by the target network device.

In some embodiments, the end time point of the first time window may be determined in various ways. As an implementation, the target network device may directly determine the end time point of the first time window. The source network device sends a handover command based on the indication from the target network device. As another implementation, the end time point of the first time window may be suggested by the source network device to the target network device. The target network device notifies the source network device after determining the end time point. The source network device sends a handover command to the terminal device based on the notification from the target network device.

In some embodiments, the length of the first time window may be determined in various ways. As an implementation, the target network device may directly determine the length of the first time window. The source network device sends a handover command based on the indication from the target network device. As another implementation, the length of the first time window may be suggested by the source network device to the target network device. The target network device notifies the source network device after determining the length of the first time window. The source network device sends a handover command to the terminal device based on the notification from the target network device.

It should be noted that after determining the parameter information of the first time window, the target network device may choose to directly notify the terminal device via the source network device or first notify the source network device. Specifically, if the target network device notifies the terminal device of the information via the source network device, the information may be transparent to the source network device. In other words, the information is invisible to the source network device. If the target network device determines the information and first notifies the source network device, which then notifies the terminal device, the information is visible to the source network device.

As a possible implementation, the start time point/end time point of the first time window may be represented by absolute time or by relative time. For example, the start time point/end time point of the first time window may be represented by a sequence number of a time-domain unit or by an absolute time.

Exemplarily, the start time point may be represented by a sequence number of a time-domain unit or by an absolute time. In some embodiments, the time-domain unit that represents the start time point may be a time unit such as a radio frame, a subframe, or a slot. The sequence number of the time-domain unit may be a number corresponding to different time-domain resources after synchronization of the device. For example, the start time point may be represented by a radio frame number, a subframe number, or a slot number. In some embodiments, the start time point may be represented by an absolute time. For example, the start time point may be March 15, 2023, 17:05:45.365.

In some embodiments, the start time point is before the first time point. In other words, the time point at which the terminal device may establish a connection with the target cell is typically before the time point at which the source cell is out of service. In some embodiments, the start time point may also be after the first time point. In such cases, it indicates that the terminal device has no NTN cell available for a short period of time. In scenarios where NTN cells only provide low-rate services, the network unavailability for the short period of time is acceptable for terminal devices with low-rate services.

As a possible implementation, if the start time point is after the first time point, the time period between the start time point and the first time point is less than a first threshold. In other words, the interval between the start time point and the first time point is required to be less than a threshold, *i.e.,* the first threshold. The first threshold may be specified by a protocol or determined based on the quality of service (QoS) of the terminal device.

The target cell may allocate radio resources for the terminal device within the first time window, so as to facilitate the terminal device to establish a connection with the target cell through the access radio resources within the first time window. For example, after determining first time window information, the target cell may allocate access radio resources within the first time window based on the information. Furthermore, the target cell may notify the source cell of the allocated access radio resources via the handover response, and the source cell may notify the terminal device of the access radio resources.

As a possible implementation, the target cell may allocate access radio resources in various ways. For example, the target cell may allocate a small segment of the time-domain position corresponding to the first time window as access radio resources for the terminal device. For example, the target cell may allocate relatively sparse time-domain resources within the first time window for the terminal device, meaning that not every transmission time interval (TTI) will have allocated resources.

As a possible implementation, the radio resources allocated by the target cell may be dedicated to communication devices or channel transmissions. For example, the access radio resources allocated by the target cell may be dedicated to the terminal device. For another example, the radio resources allocated by the target cell may be dedicated to the random access process, and may be resources for transmitting the physical random access channel (PRACH). For another example, the resources allocated by the target cell may be resources allocated to the terminal device for sending the physical uplink shared channel (PUSCH). These PUSCH resources are dedicated to the terminal device.

In some embodiments, the source network device sends a handover command to the terminal device in advance. Sending a handover command in advance means that the source network device sends a handover command a certain period of time in advance based on the stop time (the time point at which the source cell is out of service). As a possible implementation, the source network device may send a handover command in a unicast mode or in a multicast or broadcast mode. When sending in a unicast mode, the source network device may send a handover command to each terminal device that is required to be switched one by one. When sending in a multicast or broadcast mode, the source network device may send a handover command to multiple terminal devices that is required to be switched at one time. For example, the network device corresponding to the NTN cell may send a handover command in advance to multiple terminal devices that is required to be switched. By receiving the handover command in advance, the terminal device in the cell may avoid the transmission of a large number of handover commands in a short period of time before the cell is out of service.

The terminal device may receive the handover command through the source cell corresponding to the source network device. In some embodiments, after receiving the handover command, the terminal device may send a handover response to the source network device. The handover response may be configured to confirm that the terminal device has received the handover command sent by the source network device. As can be seen from the above, the terminal device may not establish a connection with the target network device immediately after receiving the handover command. Therefore, the source network device cannot wait for the target cell to inform whether the handover command has been successfully sent. By sending the handover response, the source network device may determine that the handover command sent in advance has been successfully sent. If the source network device has not received the handover response, it is assumed that the terminal device has not successfully received the handover command, and the handover command may be sent again. In other words, the source network device may determine whether to retransmit the handover command based on the handover response to ensure that the terminal device receives the handover command.

In some embodiments, if the source network device initially sends the handover command in a unicast mode, the retransmission is also performed in a unicast mode. In some embodiments, if the source network device initially sends the handover command in a multicast or broadcast mode, the retransmission may be performed in a multicast or broadcast mode or in a unicast mode.

In some embodiments, the terminal device may determine whether to send a handover response based on the indication of the handover command. For example, the terminal device may not send a handover response if it is required to execute the cell handover immediately after parsing the handover command. If the handover command indicates that the cell handover may not be executed immediately, the terminal device sends a handover response.

The terminal device may send the handover response in various ways. For example, the terminal device may send a handover response via hybrid automatic repeat request (HARQ) feedback, or via a radio resource control (RRC) message, or both. As a possible implementation, whether the terminal device chooses to send the handover response via HARQ feedback or an RRC response message may be pre-configured by the source cell or specified by a protocol.

In some embodiments, the handover response may be carried in the HARQ feedback sent by the terminal device. As a possible implementation, the terminal device sends HARQ feedback to the base station where the source cell is located if it receives the handover command through a "HARQ process that requires HARQ feedback". For example, the terminal device may send acknowledgment (ACK) feedback to the source cell.

In some embodiments, the handover response may be carried in the RRC message generated by the terminal device. For example, after successfully parsing the handover command, the terminal device may generate an RRC response message and transmit it to the source cell.

As a possible implementation, when the terminal device sends a handover response via an RRC message, it may generate an RRC message containing the handover response based on one or more of the following conditions; otherwise, the terminal device may not send an RRC response message. For example, if the terminal device parses the handover command and finds that it is not required to immediately establish a connection with the target cell, it may generate an RRC response message for the handover command and send it to the source cell. For example, if the terminal device parses the handover command and finds that the handover command indicates that "a handover response is required to be sent", it may send an RRC message containing the handover response to the source cell. For example, the handover command indicates a first time point at which the source cell is out of service. The terminal device may send an RRC message containing the handover response to the source cell if it finds that the first time point has not yet been reached.

Exemplarily, the terminal device may determine a first time period based on the first time point. The first time period may be a time period between a time point at which the terminal device finishes parsing the handover command and the first time point. If the first time period is greater than 0, or if the first time period is greater than a threshold, the terminal device may generate an RRC message carrying the handover response and transmit it to the source cell. The threshold may be referred to as a second threshold. The second threshold may be defined by the terminal device itself or may be indicated by the source cell in the handover command.

In some embodiments, the handover response sent by the terminal device to the source cell is securely processed. For example, the terminal device may perform security processing on the handover response based on a key corresponding to the source cell.

In step S420, the terminal device executes the cell handover based on the first time window. As described above, the terminal device may establish a connection with the target cell within the first time window.

In some embodiments, the terminal device may select the timing of establishing a connection with the target cell based on the indication information of the handover command. For example, if the handover command indicates that the terminal device "is required to access the target cell as soon as possible", the terminal device triggers the access process with the target cell at the start point of the first time window. For example, if the handover command indicates that the terminal device "is not required to access the target cell immediately", the terminal device may select a timing within the first time window to trigger the access process with the target cell.

In some embodiments, the terminal device may establish a connection with the target cell based on the uplink data that is required to be sent within the first time window. For example, the terminal device may initiate a connection process such as random access with the target network device within the first time window, depending on the uplink transmission requirements.

In some embodiments, the terminal device may establish a connection with the target cell based on a PDCCH order sent by the target network device. For example, if the target network device has downlink transmission requirements within the first time window, it may send a PDCCH order to the terminal device, thereby triggering the terminal device to initiate the access process with the target cell.

In some embodiments, the terminal device may also establish a connection with the target cell based on other information, which will be described in detail below with reference to FIG. 6.

As can be seen from FIG. 4, the source network device indicates the first time window during which the terminal device may execute the cell handover via the handover command. For a large number of terminal devices in the cell, there is no need to execute the cell handover in a short period of time before the source cell is out of service, thereby avoiding congestion.

As described above, in the handover process of NTN cells, there is typically a waiting period for handover between the terminal device receiving the handover command and establishing a connection with the target cell. During the period, if a system information block (SIB) of the source cell or the target cell is updated, how the terminal device handles the updated SIB of the source and target cells is an issue that needs to be addressed. For example, the terminal device receives basic SIB information of the target cell when receiving the handover command. The terminal device may access the target cell based on the basic SIB information. However, since the waiting period for handover is relatively long, the SIB of the target cell may change during the period, and the terminal device is required to determine how to maintain the SIB of the target cell before accessing the target cell.

It should be noted that the issue of how the terminal device handles the updated SIB of the cells during the waiting period after receiving the handover command in advance in NTN systems described above is only an example. The method described below may be applied to any type of scenario where the terminal device receives the handover command but does not immediately establish a connection with the target cell during the handover process.

To address the issue of how the terminal device handles SIB update during the waiting period for handover, the embodiments of the present disclosure also propose a cell handover method. In the method, the terminal device responds to an update notification of the SIB of the source cell or the target cell, and determines whether to receive the updated SIB of the source cell or the target cell based on time information of the SIB update, thereby ensuring the maintenance of the SIB of the source cell and the accuracy of the handover command.

As can be seen from the above, in communication systems such as NTNs, the first time window in the handover command indicates the start time point at which the terminal device may establish a connection with the target cell, but the terminal device typically does not immediately establish a connection with the target cell. Therefore, the time period before the terminal device establishes a connection with the target cell may include a plurality of time points: the time point at which the terminal device receives the handover command, the start time point of the first time window, the time point at which the terminal device establishes a connection with the target cell, and the first time point at which the source cell stops serving the terminal device. Specifically, the start time point may be before or after the first time point.

The terminal device may receive the update notification of the SIB between the plurality of time points. Typically, the terminal device is responsible for maintaining the SIB of the cells. During the time period between the terminal device receiving the handover command and establishing a connection with the target cell, the terminal device may receive the update notification of the SIB including the update notification of the SIB of the source cell and the update notification of the SIB of the target cell.

In response to the SIB update of the source cell and/or the target cell, the terminal device may determine whether to receive the updated SIB based on the time information of the SIB update.

Responding to the SIB update of the source cell and/or the target cell means that the terminal device receives the update notification of the SIB of the source cell and/or the target cell. In some embodiments, the terminal device receives a notification that "the SIB of the source cell has been updated" before the source cell is out of service. For example, the source network device may send the update notification of the SIB via broadcast or paging. In some embodiments, the terminal device also receives a notification that "the SIB of the target cell has been updated" before establishing a connection with the target cell. For example, the target network device may send the update notification of the SIB of the target cell to the terminal device via the source network device. The target network device sends information indicating the SIB update to the source network device, and the source network device may send the update notification of the SIB of the target cell to the terminal device based on the information.

For the SIB update of the source cell, the terminal device may maintain the SIB of the source cell before the first time point at which the source cell is out of service. For example, the terminal device may directly receive the updated SIB of the source cell before the start time point to maintain the SIB of the source cell. For example, if the configuration of the source cell is related to the configuration of the target cell, the terminal device may update the SIB of the source cell to ensure SIB information for accessing the target cell. For example, if the start time point is after the first time point, the terminal device may receive the updated SIB of the source cell.

Exemplarily, the configuration of the target cell is related to the configuration of the source cell, meaning that the configuration of the target cell is required to be determined based on the configuration of the source cell. If the configuration of the target cell in the handover command is determined based on the configuration of the source cell, the terminal device receives the updated SIB of the source cell. For example, if the configuration of the target cell in the handover command received by the terminal device uses a delta configuration approach, the configuration of the target cell is the configuration of the source cell plus a delta portion. In such cases, only the delta portion is typically notified in the handover command, and the terminal device must use the latest SIB of the source cell. In other words, the terminal device may determine "whether the updated SIB of the source cell affects the delta portion in the handover command" to obtain second information. If the configuration of the target cell is the SIB of the source cell plus the content in the handover command, the terminal device receives the updated SIB of the source cell.

Exemplarily, the terminal device may determine whether the start time point is after the first time point based on the handover command. If the start time point is after the first time point, the terminal device remains connected to the source cell before the first time point. In such cases, if the update notification of the SIB is received, the SIB information of the source cell is updated. In other words, if the start time point is after the first time point, the terminal device receives the updated SIB of the source cell.

For the SIB update of the target cell, the terminal device may also be required to update the SIB before accessing the target cell. For example, the terminal device may maintain the SIB of the target cell upon receiving the update notification of the SIB based on the configuration. For another example, the terminal device may not maintain the SIB of the target cell but re-update the SIB of the target cell before actually accessing the target cell. For another example, the terminal device may determine whether to receive the updated SIB of the target cell based on first information related to the start time point. The first information, which is related to the start time point, may facilitate the terminal device to maintain the SIB of the target cell after receiving the handover command in advance and before accessing the target cell.

For the SIB update of the target cell, the terminal device may receive the updated SIB based on the time information of the SIB update. As an implementation, the terminal device may receive the updated SIB of the target cell based on the first information related to the start time point. As another implementation, the terminal device may receive the updated SIB based on an update period of the SIB within the first time window and before handover to the target cell.

In some embodiments, the first information is related to the start time point, meaning that the first information may be configured to indicate a temporal relationship between the start time point and a time point related to the SIB update. The terminal device may determine whether to receive the updated SIB based on the temporal relationship indicated by the first information. For example, after the terminal device determines the start time point based on the handover command, the first information may indicate the relative relationship between the timing of sending the updated SIB and the start time point.

In some embodiments, the first information is related to the start time point, meaning that the first information may be determined based on the start time point. For example, if the terminal device determines that the start time point is after the first time point based on the handover command, the first information may directly instruct the terminal device to receive the updated SIB.

In some embodiments, the first information is used by the terminal device to determine whether to receive the update notification of the SIB before the start time point. For example, the first information may instruct the terminal device to receive the update notification of the SIB before the start time point, at the start time point, or after the start time point.

As a possible implementation, when the first information indicates that the terminal device receives the update notification of the SIB at or before the start time point, the terminal device may further determine whether to receive the updated SIB based on the second information. After receiving the handover command, the terminal device receives the update notification of the SIB of the target cell at or before the start time point. In other words, the terminal device may determine whether to receive the updated SIB of the target cell based on the second information. The second information may include one or more of the following: an indication of the content of the SIB update of the target cell; the timing of sending the updated SIB of the target cell.

Exemplarily, the second information may include the indication of the content of the SIB update of the target cell. In other words, the second information may indicate whether the content of the SIB update is related to the terminal device. Being related to the terminal device may mean that the content of the SIB update is of concern to the terminal device or that the content of the SIB update is related to the handover of the terminal device. If the content of the SIB update of the target cell is related to the terminal device, the terminal device receives the updated SIB of the target cell.

As an implementation, the target network device or the source network device may determine whether the content of the SIB update of the target cell is of concern to the terminal device. If the content of the SIB update is of concern to the terminal device, the source network device indicates the terminal device via the first information and/or the second information that the SIB of the target cell has been updated. If the content of the SIB update is not of concern to the terminal device, the source network device may either not notify the terminal device that the SIB has been updated, or explicitly indicate in the second information that the content of the SIB update is not of concern to the terminal device. For example, when the ephemeris information in the SIB of the target cell changes, the network device knows that the terminal device is not concerned with the information and therefore may not notify the terminal device.

Exemplarily, the second information may include the timing of sending the updated SIB of the target cell. For example, the terminal device may determine whether the timing of sending the updated SIB is before the start time point, thereby determining the second information. If the timing of sending the updated SIB of the target cell is before the start time point, the terminal device may not receive the updated SIB of the target cell. If the timing of sending the updated SIB of the target cell is after the start time point, the terminal device may receive the updated SIB of the target cell.

As another possible implementation, the first information may instruct the terminal device to receive the update notification of the SIB after the start time point. The terminal device may access the target cell after the start time point. In other words, during the time period between the start time point and the first time point, the terminal device may choose to access the target cell or not, which is implemented by the terminal device. During the time period, the terminal device may receive the update notification of the SIB of the source cell or the target cell. For the SIB update of the target cell, even if the terminal device does not access the target cell during the time period between the start time point and the first time point, it may still update the SIB of the target cell. In other words, if the first information indicates that the terminal device receives the update notification of the SIB of the target cell after the start time point, the terminal device receives the updated SIB of the target cell based on the update notification.

As yet another possible implementation, if the terminal device receives the update notification of the SIB of the source cell during the time period between the start time point and the first time point, it may not receive the updated SIB of the source cell. In other words, during the time period from when the terminal device may access the target cell to when the source cell is out of service, the terminal device does not update the SIB even if it receives the update notification of the SIB of the source cell.

As yet another possible implementation, if the terminal device chooses to access the target cell during the time period between the start time point and the first time point, it may receive the updated SIB of the target cell upon receiving the update notification of the SIB of the target cell. For example, if the terminal device chooses not to access the target cell at the start time point but uplink user data is available before the first time point, it may establish a connection with the target cell to transmit the uplink data. It should be noted that even if the terminal device chooses not to access the target cell, it still receives the update notification of the SIB of the target cell and further receives the updated SIB.

In some embodiments, the terminal device may receive the updated SIB based on the update period of the SIB of the target cell. The update period may also be referred to as a modification period. Exemplarily, the terminal device may determine whether the SIB of the target cell has been updated in each update cycle of the SIB; if the SIB of the target cell has been updated, the terminal device may receive the updated SIB of the target cell. Exemplarily, the terminal device may read the SIB from the previous cycle at the boundary of each update cycle, meaning that the terminal device reads the SIB regardless of whether it has been updated or not.

In some embodiments, the terminal device may receive the updated SIB of the target cell based on dedicated signaling sent by the source cell. In other words, the source cell may directly notify the terminal device of the updated SIB through dedicated signaling. The dedicated signaling is, for example, dedicated RRC signaling, which is specific to each terminal device. As an implementation, the target cell may also notify the source cell after the SIB of the target cell has been updated. The source cell notifies the terminal device through dedicated RRC signaling. For example, the source cell may individually notify the terminal devices that have received the handover command and are required to update the SIB of the target cell based on the updated SIB of the target cell.

How the terminal device handles the update notification of the SIB of the source cell or the target cell after receiving the handover command in advance has been described above with reference to FIG. 4. Through the method, the process of the terminal device is clarified when the terminal device finds that the SIB of the source cell or the target cell has been updated. The terminal device may determine whether to update the SIB and specific update behaviors based on the first information and other information. For ease of understanding, the following provides a brief description of a possible implementation of the method shown in FIG. 4, with reference to the timeline of cell handover shown in FIG. 5.

Referring to FIG. 5, the time point at which the source cell is out of service is T1. As shown in FIG. 5, the source network device corresponding to the source cell sends a handover command to the terminal device some time earlier than T1. After receiving the handover command, the terminal device may send a handover response via ACK feedback or via an RRC message. The terminal device determines T2, *i.e.,* the earliest moment at which it may establish a connection with the target cell, via the handover command.

Using the timeline shown in FIG. 5 as a reference, the terminal device is required to maintain the SIB of the source cell before T2. In the interval from T2 to T1, the terminal device may not update the SIB of the source cell even if it receives the update notification of the SIB of the source cell. Still in the interval from T2 to T1, before establishing a connection with the target cell, the terminal device may receive the update notification of the SIB of the target cell and update the SIB of the target cell.

As can be seen from the above, in cell handover in systems such as NTNs, the terminal device does not establish a connection with the target cell immediately after receiving the handover command. In such scenarios, related methods for measuring a handover delay are no longer applicable. The handover delay is defined as a length of time between the terminal device receiving the handover command and successfully accessing the target cell. When the terminal device does not immediately access the target cell, the premise of the definition no longer exists, and the length of time cannot be used for the handover delay. In a related protocol, the terminal device is required to determine the handover delay and report it to the network device at an appropriate timing to facilitate quality of experience (QoE) and other related statistics by the network device.

To address the issue of how the terminal device measures the handover delay, the embodiments of the present disclosure propose a method for measuring the handover delay based on the handover process described above. In the method, the terminal device may measure a time difference between a specific time point and the time point at which it achieves downlink synchronization with the target cell. In other words, the terminal device may measure a length of time from the specific time point to the time point at which it achieves downlink synchronization with the target cell. The time point for measuring the handover delay may also be referred to as a second time point.

The second time point may be one of the following: the time point at which the terminal device receives the handover command; the start time point of the first time window; and the first time point at which the source network device stops serving the terminal device.

In some embodiments, the terminal device may measure a time difference between the time point at which it receives the handover command and the time point at which it achieves downlink synchronization with the target cell. Specifically, the terminal device may measure a corresponding length of time by using the time point at which it receives the handover command as the start point and the time point at which it achieves downlink synchronization with the target cell as the end point. As a possible implementation, if the handover command is carried in an RRC signaling, the time point at which the terminal device receives the RRC signaling may be used as the start point. As a possible implementation, if the handover command is carried in a media access control control element (MAC CE), the time point at which the terminal device receives the MAC CE is used as the start point. For example, if the source network device sends the handover command via the RRC signaling and MAC CE, the terminal device uses the time point at which it receives the MAC CE as an initial time point for measuring the handover delay.

In some embodiments, the terminal device may measure a time difference between the start time point and the time point at which it achieves downlink synchronization with the target cell. Specifically, the terminal device may measure a corresponding length of time by using the earliest moment when it may switch to the target cell, as indicated in the handover command, as the start point, and the time point at which it achieves downlink synchronization with the target cell as the end point.

In some embodiments, the terminal device may measure a time difference between the first time point and the time point at which it achieves downlink synchronization with the target cell. Specifically, the terminal device may measure a corresponding length of time by using the stop time of the source cell as the start point and the time point at which it achieves downlink synchronization with the target cell as the end point.

The second time point selected by the terminal device for measuring the handover delay may be configured by a network or specified by a protocol. In some embodiments, the terminal device determines the time point for calculating the handover delay based on the configuration of the network. For example, network-side devices may be configured via operation administration and maintenance (OAM). For example, network-side devices may be configured via non-access stratum (NAS) signaling. For example, the network device may be configured via RRC signaling of the source cell.

How the terminal device handles the SIB update and measures the handover delay after receiving the handover command in advance has been described above with reference to FIG. 4 and FIG. 5. The method provided in the embodiments of the present disclosure further includes a cell handover method on the source network device and target network device sides. For the source network device, the handover command, handover response, and update notification of the SIB exchanged with the terminal device have been described above with reference to step S410, which will not be repeated herein. For the target network device, the handover command exchanged with the source network device may include the start time point described above. After establishing a connection with the terminal device, the target network device sends the update notification of the SIB to the terminal device.

As described above, the NTN network may provide low-rate services to the terminal device, and there may not always be user data to be transmitted between the terminal device and the network device. Therefore, the terminal device may not immediately access the target cell. The terminal device does not immediately establish a connection with the target cell, which may avoid congestion caused by a large number of terminal devices accessing the target cell in a centralized manner in a short period of time. Typically, as described above, the terminal device may establish a connection when data is available. However, for low-rate services, the terminal device may have no data transmission during the period when the target cell provides services. In other words, after receiving the handover command, the terminal device may establish a connection with the target cell when there is user data to be transmitted, but if there is no user data, the terminal device may not establish a connection with the target cell until the target cell stops serving the terminal device. In such cases, the terminal device is unable to obtain a second handover command and may not be able to determine a network that may provide services when the network device is required to provide services.

Based on the above, the embodiments of the present disclosure also propose a cell handover method. In the method, the terminal device may determine the access behavior in the target cell based on the indication of the handover command or the relevant provisions of the protocol, which helps to ensure that the terminal device has access to a corresponding network when needed. For ease of understanding, another cell handover method proposed in the embodiments of the present disclosure is described in detail below with reference to FIG. 6. The method is a possible implementation of step S420 in the process shown in FIG. 4. Therefore, for brevity, FIG. 6 does not provide detailed explanations of the terms already described in FIG. 4.

Referring to FIG. 6, in step S610, the terminal device receives a handover command sent by a source network device.

In step S620, the terminal device establishes a connection with the target cell based on the indication of third information.

The terminal device establishes a connection with the target cell, meaning that the terminal device triggers the access process with the target cell. The terminal device may establish a connection with the target cell in various ways. For example, the terminal device may establish a connection with the target cell by triggering a random access process with the target cell. Through the random access process, the terminal device may perform data transmission with the target cell. For example, the terminal device may establish a connection with the target cell without initiating a random access process, but instead directly performing data transmission with the target cell.

The terminal device triggers the access process corresponding to the target cell, meaning that the terminal device initiates random access or data transmission to the target network device to establish a connection with the target cell. The terminal device may trigger the random access process on its own or based on a command from the network device. For example, the PDCCH order sent by the network device to the terminal device may instruct the terminal device to initiate random access.

In some embodiments, the terminal device may initiate random access based on the indication of the handover command. For example, if the source network device instructs the terminal device to access the target cell at a specific time point or within a specific time range via the handover command, the terminal device may initiate random access at the corresponding time point. In some embodiments, the terminal device may initiate random access based on the provisions of the protocol. For example, if the protocol specifies that the terminal device is required to establish at least one connection with the target cell, the terminal device may initiate random access based on the PDCCH order sent by the network device.

The terminal device directly performs data transmission with the target cell, meaning that the terminal device directly transmits user data or other messages through the uplink radio resources that are pre-configured grant for the terminal device by the target cell. These user data or messages are encrypted, so there are no security concerns. The user data may come from an application layer or access stratum on the user side, which is not limited herein.

The terminal device may trigger the access process with the target cell based on various information. To avoid not establishing a connection with the target cell due to the absence of data transmission, the terminal device triggers the access process based on the indication of the handover command or the provisions of the protocol. The information that triggers the access process may be referred to as third information.

In some embodiments, the third information may include a third time point within the first time window when the terminal device establishes a connection with the target cell. The third time point may be the start time point of the first time window or any specific time point within the first time window. As a possible implementation, the third time point may be indicated by the base station or triggered internally by the terminal device. For example, the source network device may directly instruct the terminal device to access the target cell at the third time point via the third information.

Exemplarily, the third information may indicate the terminal device when to access the target cell via the handover command. For example, the network device may indicate the terminal device "whether it is required to access the target cell immediately, or is not required to access the target cell immediately, or chooses a moment on its own within the handover time window to access the target cell" via the handover command. If the network device instructs the terminal device to access the target cell immediately, the terminal device establishes a connection with the target cell immediately after the start time point. If the network device indicates that the terminal device is not required to access the target cell immediately, the terminal device may wait for a PDCCH order sent by the network device or for uplink data to be available before establishing a connection with the target cell. If the network device instructs the terminal device to choose a moment on its own within the handover time window to access the target cell, the connection between the terminal device and the target cell is not required to be triggered by external factors. Specifically, the external factors may include a PDCCH order sent by the network device or the availability of uplink data.

In some embodiments, the third information may include that the terminal device is required to establish at least one connection with the target cell. As a possible implementation, the handover command may instruct the terminal device to establish at least one connection with the target cell while indicating that the terminal device is not required to access the target cell immediately. As another possible implementation, the handover command may directly instruct the terminal device to establish at least one connection with the target cell, regardless of whether the terminal device accesses the target cell immediately.

As a possible implementation, when the third information includes that the terminal device is required to establish at least one connection with the target cell, the third information is indicated by the handover command. Exemplarily, the content of the third information may be determined by the target cell. After the target cell notifies the source cell, the source cell indicates the terminal device via the handover command.

Exemplarily, the third information may indicate, via the handover command, that the terminal device is required to establish at least one connection with the target cell. The information may be indicated by the target network device via the source network device. In other words, before step S610, the target network device indicates the source network device that the terminal device is required to establish at least one connection. The handover command sent by the source network device to the terminal device based on the indication of the target network device includes the third information.

As another possible implementation, when the third information includes that the terminal device is required to establish at least one connection with the target cell, the third information may be determined based on the provisions of the protocol. In other words, if the network device indicates that the terminal device is not required to access the target cell immediately, and the terminal device has no uplink data or received a PDCCH order after T2, then the protocol may specify whether the terminal device establishes at least one connection with the target cell before the target cell is out of service. Exemplarily, a new access triggering method for the terminal device may be introduced in a related protocol. Through the triggering method, the network device may trigger the terminal device to access the target cell without considering external factors or in the absence of external factors. For example, the access triggering method introduced by the protocol may be that the network device directly instructs the terminal device to access the target cell at the current moment, or at a specific moment, or within a specific time period. The trigger information may be indicated to the terminal device via the third information. For another example, the access triggering method introduced by the protocol may be that the network device sends a PDCCH order based on access requirements to trigger the terminal device to access the target cell. Unlike related technologies, the network device sends a PDCCH order not because of downlink data but because of the need to trigger the access of the terminal device. In other words, the related protocol may specify that "a new method for triggering random access is introduced, not due to a PDCCH order triggered by the arrival of downlink data, but due to the fact that the terminal device establishes a connection with at least the NTN cell".

Exemplarily, the source network device may instruct the terminal device to establish at least one connection with the target cell based on the relevant provisions of the protocol. Exemplarily, the target network device is required to establish at least one connection with the terminal device based on the provisions of the protocol. The source network device may instruct the terminal device to establish at least one connection with the target cell in the handover command based on the handover response sent by the target network device.

Exemplarily, the handover command sent by the source network device may also indicate that the terminal device is not required to establish at least one connection with the target cell. In such cases, the target network device may choose an appropriate timing on its own to send a PDCCH order to the terminal device based on the relevant provisions of the protocol, without considering whether there is downlink data to be transmitted. In other words, the terminal device may receive a downlink control command from the target network device, wherein the downlink control command is configured to instruct the terminal device to trigger a random access process for connecting to the target cell in the absence of data transmission.

As a possible implementation, to establish a connection with the target cell, the terminal device may generate some RRC messages or NAS messages, or generate some data through PDCP. For example, to generate a NAS message, the NAS may be instructed via RRC to generate a message for establishing a connection with the target cell.

As a possible implementation, when the third information indicates that the terminal device is required to establish at least one connection with the target cell, the terminal device may choose a timing for establishing the connection based on the initial time point or other time points. In some embodiments, the target network device may determine some time thresholds and notify the terminal device via the handover command or other means. For example, the handover command may indicate some time thresholds for the terminal device to determine the timing for connection. In some embodiments, the terminal device may also choose a timing on its own for establishing the connection. Specific implementations will be described with reference to FIG. 7.

As described above, the terminal device may choose a timing for random access based on the initial time point or other time points. In some embodiments, the terminal device may determine a time point for establishing a connection with the target cell based on the start time point or a fourth time point indicated by the handover command; wherein the fourth time point is a time point at which the target cell stops serving the terminal device. Exemplarily, the handover command may indicate a second time period ending at the fourth time point. If the terminal device does not establish a connection with the target cell before the start time point of the second time period, the terminal device establishes a connection with the target cell within the second time period. Exemplarily, the handover command may indicate a third time period starting from the start time point. If the terminal device does not establish a connection with the target cell within the third time period, the terminal device establishes a connection with the target cell after the third time period. For example, the terminal device may start a timer at the start time point, with the length of the timer set to the third time period.

For ease of understanding, various possible implementations are described below with reference to the timeline shown in FIG. 7.

Referring to FIG. 7, the first time point at which the source cell is out of service is T1, the earliest moment when the terminal device may establish a connection with the target cell (the start time point of the first time window) is T2, and the fourth time point at which the target cell is out of service is T3.

As shown in FIG. 7, the target cell may instruct the terminal device to establish a connection with the target cell within the second time period (threshold A) before T3, or may indicate the UE to establish a connection with the target cell after the third time period (threshold B) following T2. It should be noted that the terminal device establishes a connection with the target cell using the method shown in FIG. 7 provided that the terminal device has not established a connection with the target cell. Specifically, if the scheme of the third time period is used, the terminal device may start a timer at T2, with the length of the timer set to the third time period, and when the timer expires, the terminal device initiates random access. If the terminal device has initiated random access before the timer expires, the timer is canceled.

If the target network device does not configure the second time period or the third time period, the target network device may also choose an appropriate timing to trigger the terminal device to initiate random access based on the provisions of the protocol.

How the terminal device and the target network device initiate the random access process when there is no data to be transmitted has been described above with reference to FIG. 6 and FIG. 7. Since there is no data to be transmitted, if the terminal device initiates random access through the relevant random access process or direct data transmission, there may be security risks. For example, in message 3 (msg3) of the random access, the terminal device transmits a MAC CE containing only a cell radio network temporary identifier (C-RNTI), which is an identifier C-RNTI assigned to the terminal device by the target network device. In the process, the MAC CE is generated at a MAC layer, while security verification between devices is typically performed at a higher packet data convergence protocol (PDCP) layer. If the terminal device initiates random access to the target cell for the first time and only transmits a MAC CE in message 3, the target network device is unable to verify the identity of the terminal device through the MAC CE, thereby posing security risks. Based on the above analysis, the embodiments of the present disclosure propose methods to reduce security risks.

In some embodiments, the terminal device may send data and/or messages generated by itself for security verification to the target network device to reduce such security risks. For example, the terminal device may transmit data and/or messages for security verification via message 3 sent to the target network device. These data and/or messages may include one or more of the following: RRC messages, NAS messages, and data generated by PDCP. As described above, security verification is performed at the PDCP layer and above, so these data and/or messages may be generated at higher layers.

As a possible implementation, the data for security verification is generated at the access stratum of the terminal device. As a possible implementation, the terminal device may transmit some user plane data generated by itself via message 3, which is processed by PDCP and transmitted to the target cell. For example, the user data is generated by the PDCP layer of the terminal device. It should be noted that normal user data is generated by the application layer and handed over to the access stratum for transmission. The user data for security verification is generated by the access stratum of the terminal device on its own, which is different from normal user data.

As another possible implementation, the terminal device may also generate RRC messages for this purpose, such as measurement reports or handover completion messages. The terminal device sends these reports or messages to the target cell via message 3. After security verification, the target cell may confirm the legitimate identity of the terminal device.

As yet another possible implementation, the terminal device may also generate NAS messages for security verification. For example, the terminal device may instruct the NAS via RRC to generate NAS messages for security verification.

In some embodiments, the terminal device may receive a first command sent by the target network device via an RRC message for indicating the cell handover. The first command may be securely processed based on a key corresponding to the target cell and the terminal device. Through the security processing, the target cell may verify the legitimate identity of the terminal device. As a possible implementation, the target cell may send a "handover command" or other RRC messages to the terminal device via RRC signaling. As another possible implementation, the target cell may send a handover command to the terminal device to switch to the next target cell. The handover command is encrypted with a key. For example, the handover command may use a key jointly derived by the target cell and the terminal device. If the terminal device is legitimate, it may decrypt the "handover command" with the correct key; otherwise, the terminal device cannot decrypt the handover command.

It should be noted that if the target cell does not require the terminal device to establish at least one connection in the cell, the terminal device may directly ignore the security processing described above. If the terminal device receives a handover command sent by the target cell, it proceeds to the next target cell as configured in the handover command.

To better understand the security processing described above, the method for reducing security risks is described below with reference to the handover process shown in FIG. 8.

Referring to FIG. 8, steps S810 to S850 are the same as steps S320 to S360 shown in FIG. 3, which will not be repeated herein.

In step S860, the terminal device includes data and/or messages for security verification in message 3 sent to the target cell. These data are not user data that the terminal device is required to upload but rather some user plane data generated by the access stratum of the terminal device on its own, and these messages may be RRC messages or measurement reports. Security verification will be performed at the PDCP layer during the transmission of these data and/or messages. In other words, if the terminal device has no user data transmission, but for the purpose of "having to establish at least one connection with the target cell", the terminal device cannot transmit only "C-RNTI MAC CE" in message 3, but performs security verification or user identity confirmation through higher-layer transmission.

The method described above for ensuring that the terminal device establishes a connection with the target network device is written from the perspective of the terminal device. The terminal device is required to implement the method by interacting with the source network device and the target network device. The description of the method embodiments for the source network device and the target network device corresponds to that of the terminal device, which will not be repeated herein.

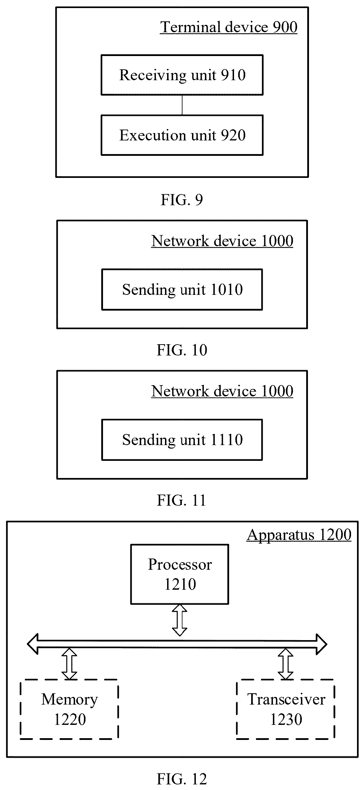

The method embodiments of the present disclosure are described in detail above with reference to FIGs. 1 to 8. The apparatus embodiments of the present disclosure will be described in detail below with reference to FIGs. 9 to 11. It should be understood that the description of the apparatus embodiments corresponds to the description of the method embodiments, and therefore, for parts that are not described in detail, reference may be made to the foregoing method embodiments.

FIG. 9 is a schematic block diagram of a terminal device according to an embodiment of the present disclosure. The terminal device 900 may be any one of the terminal devices described above. The terminal device 900 shown in FIG. 9 includes a receiving unit 910 and an execution unit 920.

The receiving unit 910 may be configured to receive a handover command sent by a source network device, wherein the handover command is configured to indicate a first time window during which the terminal device may switch from a source cell corresponding to the source network device to a target cell corresponding to a target network device.

The execution unit 920 may be configured to execute the cell handover based on the first time window.

Optionally, the terminal device 900 further includes a first determination unit, which may be configured to determine, in response to an SIB update of the source cell and/or the target cell, whether to receive the updated SIB based on time information of the SIB update.

Optionally, the receiving unit 910 is further configured to receive the updated SIB of the target cell based on one of the following: first information related to a start time point of the first time window; an update period of the SIB of the target cell.

Optionally, the first information indicates that the terminal device receives an update notification of the SIB of the target cell at or before the start time point, and the first determination unit is further configured to determine whether to receive the updated SIB of the target cell based on second information; wherein the second information includes one or more of the following: an indication of the content of the SIB update of the target cell; the timing of sending the updated SIB of the target cell.

Optionally, the second information includes the content of the SIB update of the target cell, and the receiving unit 910 is further configured to receive the updated SIB of the target cell if the content of the SIB update is related to the terminal device.

Optionally, the first information indicates that the terminal device receives the update notification of the SIB of the target cell, and the receiving unit 910 is further configured to receive the updated SIB of the target cell based on the update notification.

Optionally, the first determination unit is further configured to determine whether the SIB of the target cell has been updated in each update cycle; the receiving unit 910 is further configured to receive the updated SIB of the target cell if the SIB of the target cell has been updated.

Optionally, the receiving unit 910 is further configured to not receive the updated SIB of the source cell if the terminal device receives the update notification of the SIB of the source cell after the start time point of the first time window and before the first time point at which the source cell stops serving the terminal device.

Optionally, the start time point and the end time point of the first time window are indicated by one of the following: a sequence number of a time-domain unit; an absolute time.

Optionally, the terminal device 900 further includes a first sending unit, which may be configured to send a handover response to the source network device, wherein the handover response is configured to indicate that the terminal device has received the handover command sent by the source network device.

Optionally, the terminal device further includes a parsing unit, which may be configured to parse the handover command; the first sending unit is further configured to not send the handover response to the source network device if the handover command instructs the terminal device to execute the handover command immediately; the first sending unit is further configured to send the handover response to the source network device if the handover command instructs the terminal device not to execute the handover command immediately.

Optionally, the handover response is carried in one or more of the following messages: HARQ feedback sent by the terminal device; an RRC message generated by the terminal device.

Optionally, if the handover response is carried in an RRC message, the terminal device further includes a generation unit, which may be configured to generate the RRC message based on one or more of the following conditions: the terminal device does not establish a connection with the target cell at the start time point of the first time window; the first time point at which the source cell stops serving the terminal device; the handover command instructs the terminal device to send the handover response.

Optionally, the terminal device further includes a second determination unit, which may be configured to determine a first time period based on the first time point at which the source cell stops serving the terminal device, wherein the first time period is a time period between a time point at which the handover command has been parsed and the first time point; the generation unit is further configured to generate an RRC message carrying the handover response if the first time period is greater than 0 or greater than a second threshold.

Optionally, the terminal device further includes a processing unit, which may be configured to perform security processing on the handover response based on a key corresponding to the source cell.

Optionally, the terminal device further includes a measuring unit, which may be configured to measure a handover delay based on a second time point and the time point at which the terminal device achieves downlink synchronization with the target cell; wherein the second time point is one of the following: the time point at which the terminal device receives the handover command; the start time point of the first time window; and the first time point at which the source network device stops serving the terminal device.

Optionally, the second time point for measuring the handover delay is configured by a network.

Optionally, the execution unit 920 is further configured to establish a connection with the target cell based on the indication of third information, wherein the third information includes one of the following: the terminal device establishes a connection with the target cell at a third time point within the first time window; the terminal device is required to establish at least one connection with the target cell.

Optionally, the third information includes whether the terminal device is required to establish at least one connection with the target cell, the third information being indicated by the handover command and/or specified by a protocol.

Optionally, the receiving unit 910 is further configured to receive a downlink control command from the target network device, wherein the downlink control command is configured to instruct the terminal device to establish a connection with the target cell in the absence of data transmission.

Optionally, the terminal device further includes a third determination unit, which may be configured to determine a time point for establishing a connection with the target cell based on the start time point of the first time window or a fourth time point indicated by the handover command; wherein the fourth time point is a time point at which the target cell stops serving the terminal device.

Optionally, the handover command is further configured to indicate a second time period ending at the fourth time point, and the execution unit 910 is further configured to establish a connection with the target cell within the second time period if the terminal device has not established a connection with the target cell before the start time point of the second time period.

Optionally, the handover command is further configured to indicate a third time period starting from the start time point of the first time window, and the execution unit 910 is further configured to establish a connection with the target cell after the third time period if the terminal device has not established a connection with the target cell within the third time period.

Optionally, the execution unit 910 is further configured to start a timer at the start time point, with the length of the timer set to the third time period; and to cancel the timer if the terminal device establishes a connection with the target cell within the third time period.

Optionally, the terminal device further includes a second sending unit, which may be configured to send data and/or messages generated by the terminal device for security verification to the target network device.

Optionally, the data for security verification is generated at an access stratum of the terminal device.

Optionally, the data and/or messages for security verification include one or more of the following: RRC messages, non-access stratum NAS messages, and data generated by packet data convergence protocol PDCP.

Optionally, the messages for security verification include NAS messages, and the terminal device further includes an indication unit, which is configured to indicate the NAS layer via the RRC layer to generate NAS messages for security verification.

Optionally, the receiving unit 910 is further configured to receive a first command sent by the target network device via an RRC message, wherein the first command is securely processed based on a key corresponding to the target cell and the terminal device.

FIG. 10 is a schematic block diagram of a network device according to an embodiment of the present disclosure. The network device 1000 may be any one of the source network devices described above. The network device 1000 shown in FIG. 10 includes a sending unit 1010.

The sending unit 1010 may be configured to send a handover command to a terminal device, wherein the handover command is configured to indicate a first time window during which the terminal device may switch from a source cell corresponding to the source network device to a target cell corresponding to a target network device; wherein the first time window is used by the terminal device to execute the cell handover.

Optionally, the sending unit 1010 is further configured to send an update notification of the SIB of the source cell to the terminal device, and the time information of the SIB update is used by the terminal device to determine whether to receive the updated SIB.

Optionally, the network device 1000 further includes a first receiving unit, which may be configured to receive indication information sent by the target network device, wherein the indication information is used by the source network device to determine the handover command.

Optionally, the network device 1000 further includes a second receiving unit, which may be configured to receive an update notification of the SIB of the target cell sent by the target network device; the sending unit 1010 is further configured to send the update notification of the SIB of the target cell to the terminal device, and the time information of the SIB update is used by the terminal device to determine whether to receive the updated SIB.

Optionally, the start time point and the end time point of the first time window are indicated by one of the following: a sequence number of a time-domain unit; an absolute time.

Optionally, the network device 1000 further includes a third receiving unit, which may be configured to receive a handover response sent by the terminal device, wherein the handover response is configured to indicate that the terminal device has received the handover command sent by the source network device.

Optionally, the handover response is carried in one or more of the following messages: HARQ feedback sent by the terminal device; an RRC message generated by the terminal device.

Optionally, the handover command includes third information for instructing the terminal device to establish a connection with the target cell, the third information including one of the following: the terminal device establishes a connection with the target cell at a third time point within the first time window; the terminal device is required to establish at least one connection with the target cell.

Optionally, the third information includes whether the terminal device is required to establish at least one connection with the target cell, the third information being indicated by the target network device and/or specified by a protocol.

FIG. 11 is a schematic block diagram of another network device according to an embodiment of the present disclosure. The network device 1100 may be any one of the target network devices described above. The network device 1100 shown in FIG. 11 includes a sending unit 1110.

The sending unit 1110 may be configured to send indication information to a source network device, wherein the indication information is used by the source network device to determine a handover command, which is configured to indicate a first time window during which the terminal device may switch from a source cell corresponding to the source network device to a target cell corresponding to a target network device; wherein the first time window is used by the terminal device to execute the cell handover.

Optionally, the sending unit 1110 is further configured to send an update notification of the SIB of the target cell to the source network device, and the time information of the update notification of the SIB is used by the terminal device to determine whether to receive the updated SIB.

Optionally, the start time point and the end time point of the first time window are indicated by one of the following: a sequence number of a time-domain unit; an absolute time.

Optionally, the handover command includes third information for instructing the terminal device to establish a connection with the target cell, the third information including one of the following: the terminal device establishes a connection with the target cell at a third time point within the first time window; the terminal device is required to establish at least one connection with the target cell.

Optionally, the third information includes whether the terminal device is required to establish at least one connection with the target cell, and the sending unit 1110 is further configured to send a downlink control command to the terminal device, wherein the downlink control command is configured to instruct the terminal device to establish a connection with the target cell in the absence of data transmission.

Optionally, the indication information is further configured to indicate a fourth time point, and the fourth time point is used by the terminal device to determine a time point for establishing a connection with the target cell; wherein the fourth time point is a time point at which the target cell stops serving the terminal device.

Optionally, the indication information is further configured to indicate a second time period ending at the fourth time point and/or a third time period starting from the start time point of the first time window, wherein the second time period and/or the third time period are used by the terminal device to determine a time point for establishing a connection with the target cell.

Optionally, the network device 1100 further includes a receiving unit, which may be configured to receive data and/or messages for security verification sent by the terminal device, wherein the data and/or messages for security verification are generated by the terminal device.

Optionally, the data for security verification is generated at an access stratum of the terminal device.

Optionally, the data and/or messages for security verification include one or more of the following: RRC messages, NAS messages, and data generated by PDCP.

Optionally, the sending unit 1110 is further configured to send a first command to the terminal device via an RRC message for indicating the cell handover, wherein the first command is securely processed based on a key corresponding to the target cell and the terminal device.

FIG. 12 is a schematic structural diagram of a communication apparatus according to an embodiment of the present disclosure. The dashed lines in FIG. 12 indicate that the unit or module is optional. The apparatus 1200 may be configured to perform the method described in the foregoing method embodiments. The apparatus 1200 may be a chip, a terminal device, or a network device.

The apparatus 1200 may include one or more processors 1210. The processor 1210 may support the apparatus 1200 to perform the method described in the foregoing method embodiments. The processor 1210 may be a general-purpose processor or a dedicated processor. For example, the processor may be a central processing unit (CPU). Alternatively, the processor may be another general-purpose processor, a digital signal processor (DSP), an application-specific integrated circuit (ASIC), a field-programmable gate array (FPGA) or another programmable logic device, a discrete gate or transistor logic device, a discrete hardware component, *etc.* The general-purpose processor may be a microprocessor, or the processor may be any conventional processor, *etc.*

The apparatus 1200 may further include one or more memories 1220. The memory 1220 stores a program that may be executed by the processor 1210, causing the processor 1210 to perform the method described in the foregoing method embodiments. The memory 1220 may be independent of the processor 1210 or may be integrated into the processor 1210.

The apparatus 1200 may further include a transceiver 1230. The processor 1210 may communicate with another device or chip through the transceiver 1230. For example, the processor 1210 may transmit data to and receive data from another device or chip through the transceiver 1230.

An embodiment of the present disclosure further provides a computer-readable storage medium for storing a program. The computer-readable storage medium may be applied to the terminal or network device provided in the embodiments of the present disclosure, and the program causes a computer to perform the method to be performed by the terminal or network device in various embodiments of the present disclosure.

The computer-readable storage medium may be any available medium readable by a computer, or a data storage device, such as a server or a data center integrated with one or more available media. The available medium may be a magnetic medium (e.g., a floppy disk, a hard disk, or a magnetic tape), an optical medium (e.g., a digital video disc (DVD)), or a semiconductor medium (e.g., a solid-state drive (SSD)).

An embodiment of the present disclosure further provides a computer program product. The computer program product includes a program. The computer program product may be applied to the terminal or network device provided in the embodiments of the present disclosure, and the program causes a computer to perform the method to be performed by the terminal or network device in various embodiments of the present disclosure.

The foregoing embodiments may be implemented completely or partially by software, hardware, firmware, or any combination thereof. When implemented using software, the foregoing embodiments may be implemented completely or partially in the form of a computer program product. The computer program product includes one or more computer instructions. When the computer program instructions are loaded and executed on a computer, the procedures or functions according to the embodiments of the present disclosure are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (e.g., a coaxial cable, an optical fiber, and a digital subscriber line (DSL)) manner or a wireless (e.g., infrared, wireless, and microwave) manner.

An embodiment of the present disclosure further provides a computer program. The computer program may be applied to the terminal or network device provided in the embodiments of the present disclosure, and the computer program causes a computer to perform the method to be performed by the terminal or network device in various embodiments of the present disclosure.

The terms "system" and "network" may be used interchangeably in the present disclosure. In addition, the terms used in the present disclosure are only configured to explain the specific embodiments of the present disclosure, and are not intended to limit the present disclosure. The terms "first", "second", "third", and "fourth" in the specification, claims, and accompanying drawings of the present disclosure are configured to distinguish between different objects, rather than to describe a specific order. In addition, the terms "include" and "have", as well as any variations thereof, are intended to cover a non-exclusive inclusion.

In the embodiments of the present disclosure, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In the embodiments of the present disclosure, the term "corresponding" may mean that there is a direct or indirect correspondence between the two, or may mean that there is an association relationship between the two, which may also be a relationship such as indicating and being indicated, or configuring and being configured.

In the embodiments of the present disclosure, "pre-defined" or "pre-configured" may be implemented by pre-storing a corresponding code or table in a device (for example, including a terminal device and a network device), or other methods that may be configured to indicate related information. The specific implementation is not limited in the present disclosure. For example, pre-defined may refer to being defined in a protocol.

In the embodiments of the present disclosure, the "protocol" may refer to a standard protocol in the field of communications, and may include, for example, an LTE protocol, an NR protocol, and a related protocol applied to a future communication system, which is not limited in the present disclosure.

In the embodiments of the present disclosure, determining B based on A does not mean determining B only based on A, but instead B may be determined based on A and/or other information.

In the embodiments of the present disclosure, the term "and/or" is merely an association relationship that describes associated objects, indicating that there may be three relationships. For example, A and/or B may represent three cases: only A is present, both A and B are present, and only B is present. In addition, the character "/" herein generally indicates an "or" relationship between the associated objects.

In various embodiments of the present disclosure, the numerical order of the aforementioned processes does not imply a sequence of execution. The execution order of each process should be determined based on its function and internal logic, and should not impose any limitation on the implementation process of the embodiments of the present disclosure.

In several embodiments provided in the present disclosure, it should be understood that the disclosed system, apparatus, and method may be implemented in other ways. For example, the apparatus embodiments described above are merely illustrative. For example, the division of units is merely a logical functional division, and there may be other ways of division in actual implementation. For example, a plurality of units or components may be combined or integrated into another system, or some features may be omitted or not implemented. In addition, the displayed or discussed mutual couplings or direct couplings or communication connections may be implemented through indirect coupling or communication connection via some interfaces, devices, or units, and may be implemented in electronic, mechanical, or other forms.

The units described as separate components may or may not be physically separated, and the components displayed as units may or may not be physical units, *i.e.,* they may be located in one place or distributed on a plurality of network units. Some or all of the units may be selected according to actual needs to achieve the purpose of the solutions of the embodiments.

In addition, the function units in various embodiments of the present disclosure may be integrated into one processing unit, or each of the units may exist alone physically, or two or more units may be integrated into one unit.

The foregoing descriptions are merely specific implementations of the present disclosure, but the scope of protection of the present disclosure is not limited thereto. Any changes or substitutions readily figured out by those skilled in the art within the technical scope disclosed in the present disclosure shall fall within the scope of protection of the present disclosure. Therefore, the scope of protection of the present disclosure shall be subject to the scope of protection of the appended claims.

## Claims

1. A cell handover method, **characterized by** comprising:
receiving, by a terminal device, a handover command sent by a source network device, wherein the handover command is configured to indicate a first time window during which the terminal device can switch from a source cell corresponding to the source network device to a target cell corresponding to a target network device;
performing, by the terminal device, the cell handover based on the first time window.

2. The method according to claim 1, **characterized in that** after the terminal device receives the handover command sent by the source network device and before the terminal device executes the cell handover based on the first time window, the method further comprises:
in response to an update of a system information block SIB of the source cell and/or the target cell, determining, by the terminal device, whether to receive an updated SIB based on time information of the update of the SIB.

3. The method according to claim 2, **characterized by** further comprising:
receiving, by the terminal device, the updated SIB of the target cell based on one of the following:
first information related to a start time point of the first time window;
an update period of the SIB of the target cell.

4. The method according to claim 3, **characterized in that** the first information indicates that the terminal device receives an update notification of the SIB of the target cell at the start time point or before the start time point, the method further comprising:
determining, by the terminal device, whether to receive the updated SIB of the target cell based on second information;
wherein the second information comprises one or more of the following:
an indication of content of the update of a SIB of the target cell;
transmission time of the updated SIB of the target cell.

5. The method according to claim 4, **characterized in that** the second information comprises the content of an update of a SIB of the target cell, the method further comprising:
receiving, by the terminal device, the updated SIB of the target cell if the content of the update of the SIB of the target cell is related to the terminal device.

6. The method according to claim 3, **characterized in that** the first information indicates that the terminal device receives an update notification of the SIB of the target cell, the method further comprising:
receiving, by the terminal device, the updated SIB of the target cell based on the update notification.

7. The method according to claim 3, **characterized in that** the receiving, by the terminal device, the updated SIB of the target cell based on an update period of the SIB of the target cell comprises:
in each update period, determining, by the terminal device, whether there is an update of the SIB of the target cell;
receiving, by the terminal device, an updated SIB of the target cell if there is an update of the SIB of the target cell.

8. The method according to claim 2, **characterized in that** the method further comprises:
not receiving, by the terminal device, the updated SIB of the source cell, if the terminal device receives an update notification of the SIB of the source cell after a start time point of the first time window and before a first time point at which the source cell stops serving the terminal device.

9. The method according to any one of claims 1 to 8, **characterized in that** a start time point and an end time point of the first time window are indicated by one of the following: a sequence number of a time-domain unit and an absolute time.

10. The method according to any one of claims 1 to 9, **characterized in that** after the terminal device receives the handover command sent by the source network device, the method further comprises:
sending, by the terminal device, a handover response to the source network device, wherein the handover response is configured to indicate that the terminal device has received the handover command sent by the source network device.

11. The method according to claim 10, **characterized by** further comprising:
parsing, by the terminal device, the handover command;
not sending, by the terminal device, the handover response to the source network device if the handover command instructs the terminal device to execute the handover command immediately;
sending, by the terminal device, the handover response to the source network device if the handover command instructs the terminal device not to execute the handover command immediately.

12. The method according to claim 10, **characterized in that** the handover response is carried in one or more of the following messages:
hybrid automatic repeat request HARQ feedback sent by the terminal device;
a radio resource control RRC message generated by the terminal device.

13. The method according to claim 12, **characterized in that** the handover response is carried in the RRC message, the method further comprising:
generating, by the terminal device, the RRC message based on one or more of the following conditions:
that the terminal device does not establish a connection with the target cell at the start time point of the first time window;
the first time point at which the source cell stops serving the terminal device;
that the handover command instructs the terminal device to send a handover response.

14. The method according to claim 13, **characterized by** further comprising:
determining, by the terminal device, a first time period based on the first time point at which the source cell stops serving the terminal device, wherein the first time period is a time period between a time point at which the handover command has been parsed and the first time point;
generating, by the terminal device, an RRC message carrying the handover response if the first time period is greater than 0 or greater than a second threshold.

15. The method according to claim 10, **characterized in that** the method further comprises:
performing, by the terminal device, security processing on the handover response based on a key corresponding to the source cell.

16. The method according to any one of claims 1 to 15, **characterized in that** the method further comprises:
measuring, by the terminal device, a handover delay based on a second time point and a time point at which the terminal device achieves downlink synchronization with the target cell;
wherein the second time point is one of the following:
the time point at which the terminal device receives the handover command;
the start time point of the first time window;
the first time point at which the source network device stops serving the terminal device.

17. The method according to claim 16, **characterized in that** the second time point for measuring the handover delay is configured via a network.

18. The method according to any one of claims 1 to 17, **characterized in that** the performing, by the terminal device, the cell handover based on the first time window comprises:
establishing, by the terminal device, a connection with the target cell based on an indication of third information, wherein the third information comprises one of the following:
that the terminal device establishes a connection with the target cell at a third time point within the first time window;
that the terminal device is required to establish at least one connection with the target cell.

19. The method according to claim 18, **characterized in that** the third information comprises whether the terminal device is required to establish at least one connection with the target cell, the third information being indicated by the handover command and/or specified by a protocol.

20. The method according to claim 18 or 19, **characterized in that** the third information comprises whether the terminal device is required to establish at least one connection with the target cell, the method further comprising:
receiving, by the terminal device, a downlink control command from the target network device, wherein the downlink control command is configured to instruct the terminal device to establish a connection with the target cell in the absence of data transmission.

21. The method according to any one of claims 18 to 20, **characterized in that** the third information comprises whether the terminal device is required to establish at least one connection with the target cell, the method further comprising:
determining, by the terminal device, a time point for establishing a connection with the target cell based on the start time point of the first time window or a fourth time point indicated by the handover command;
wherein the fourth time point is a time point at which the target cell stops serving the terminal device.

22. The method according to claim 21, **characterized in that** the handover command is further configured to indicate a second time period ending at the fourth time point, the method further comprising:
establishing, by the terminal device, a connection with the target cell within the second time period if the terminal device does not establish a connection with the target cell before the start time point of the second time period.

23. The method according to claim 21, **characterized in that** the handover command is further configured to indicate a third time period starting from the start time point of the first time window, the method further comprising:
establishing, by the terminal device, a connection with the target cell after the third time period if the terminal device does not establish a connection with the target cell within the third time period.

24. The method according to claim 23, **characterized in that** the method further comprises:
starting, by the terminal device, a timer at the start time point, wherein a length of the timer is configured to the third time period;
canceling the timer if the terminal device establishes a connection with the target cell within the third time period.

25. The method according to any one of claims 1 to 24, **characterized in that** the terminal device performs the cell handover based on the first time window, the method further comprising:
sending, by the terminal device, data and/or messages to the target network device, wherein the data and/or messages are generated by the terminal device for security verification.

26. The method according to claim 25, **characterized in that** the data for security verification is generated at an access stratum of the terminal device.

27. The method according to claim 25, **characterized in that** the data and/or messages for security verification comprise one or more of the following: an RRC message, a non-access stratum NAS message, and data generated by packet data convergence protocol PDCP.

28. The method according to claim 27, **characterized in that** the message for security verification comprises the NAS message, the method further comprising:
instructing, by the terminal device, the NAS via RRC to generate a NAS message for security verification.

29. The method according to any one of claims 1 to 24, **characterized in that** the method comprises:
receiving, by the terminal device, a first command sent by the target network device via an RRC message, wherein the first command is securely processed based on a key corresponding to the target cell and the terminal device.

30. A cell handover method, **characterized by** comprising:
sending, by a source network device, a handover command to a terminal device, wherein the handover command is configured to indicate a first time window during which the terminal device may switch from a source cell corresponding to the source network device to a target cell corresponding to a target network device;
wherein the first time window is configured for the mobile device to perform the cell handover.

31. The method according to claim 30, **characterized by** further comprising:
sending, by the source network device, an update notification of a system information block SIB of the source cell to the terminal device, and time information of an update of the SIB is configured for the terminal device to determine whether to receive an updated SIB.

32. The method according to claim 30, **characterized in that** before the source network device sends the handover command to the terminal device, the method further comprises:
receiving, by the source network device, indication information sent by the target network device, wherein the indication information is configured for the source network device to determine the handover command.

33. The method according to claim 30, **characterized by** further comprising:
receiving, by the source network device, an update notification of the SIB of the target cell sent by the target network device;
sending, by the source network device, the update notification of the SIB of the target cell to the terminal device, and time information of the SIB update is configured for the terminal device to determine whether to receive an updated SIB.

34. The method according to any one of claims 30 to 33, **characterized in that** the start time point and an end time point of the first time window are indicated by one of the following: a sequence number of a time-domain unit and an absolute time.

35. The method according to any one of claims 30 to 34, **characterized in that** after the source network device sends the handover command to the terminal device, the method further comprises:
receiving, by the source network device, a handover response sent by the terminal device, wherein the handover response is configured to indicate that the terminal device has received the handover command sent by the source network device.

36. The method according to claim 35, **characterized in that** the handover response is carried in one or more of the following messages:
hybrid automatic repeat request HARQ feedback sent by the terminal device;
a radio resource control RRC message generated by the terminal device.

37. The method according to any one of claims 30 to 36, **characterized in that** the handover command comprises third information for instructing the terminal device to establish a connection with the target cell, the third information comprising one of the following:
that the terminal device establishes a connection with the target cell at a third time point within the first time window;
that the terminal device is required to establish at least one connection with the target cell.

38. The method according to claim 37, **characterized in that** the third information comprises whether the terminal device is required to establish at least one connection with the target cell, the third information being indicated by the target network device and/or specified by a protocol.

39. A cell handover method, **characterized by** comprising:
sending, by a target network device, indication information to a source network device, wherein the indication information is configured for the source network device to determine a handover command, and the handover command is configured to indicate a first time window during which a terminal device can switch from a source cell corresponding to the source network device to a target cell corresponding to the target network device;
wherein the first time window is configured for the terminal device to perform the cell handover.

40. The method according to claim 39, **characterized by** further comprising:
sending, by the target network device, an update notification of a system information block SIB of the target cell to the source network device, and time information of the update notification of the SIB is configured for the terminal device to determine whether to receive an updated SIB.

41. The method according to claim 39 or 40, **characterized in that** a start time point and an end time point of the first time window are indicated by one of the following: a sequence number of a time-domain unit and an absolute time.

42. The method according to any one of claims 39 to 41, **characterized in that** the handover command comprises third information that is configured to instruct the terminal device to establish a connection with the target cell, the third information comprising one of the following:
that the terminal device establishes a connection with the target cell at a third time point within the first time window;
that the terminal device is required to establish at least one connection with the target cell.

43. The method according to claim 42, **characterized in that** the third information comprises whether the terminal device is required to establish at least one connection with the target cell, the method further comprising:
sending, by the target network device, a downlink control command to the terminal device, wherein the downlink control command is configured to instruct the terminal device to establish a connection with the target cell in the absence of data transmission.

44. The method according to any one of claims 39 to 43, **characterized in that** the indication information is further configured to indicate a fourth time point, and the fourth time point is configured for the terminal device to determine a time point for establishing a connection with the target cell;
wherein the fourth time point is a time point at which the target cell stops serving the terminal device.

45. The method according to claim 44, **characterized in that** the indication information is further configured to indicate a second time period ending at the fourth time point and/or a third time period starting from the start time point of the first time window, wherein the second time period and/or the third time period are configured for the terminal device to determine a time point for establishing a connection with the target cell.

46. The method according to any one of claims 39 to 45, **characterized by** further comprising:
receiving, by the target network device, data and/or messages for security verification sent by the terminal device, wherein the data and/or messages for security verification are generated by the terminal device.

47. The method according to claim 46, **characterized in that** the data for security verification is generated at an access stratum of the terminal device.

48. The method according to claim 46, **characterized in that** the data and/or messages for security verification comprise one or more of the following: a radio resource control RRC message, a non-access stratum NAS message, and data generated by packet data convergence protocol PDCP.

49. The method according to any one of claims 39 to 45, **characterized by** further comprising:
sending, by the target network device, a first command to the terminal device via an RRC message for indicating the cell handover, wherein the first command is securely processed based on a key corresponding to the target cell and the terminal device.

50. A terminal device, **characterized by** comprising:
a receiving unit, configured to receive a handover command sent by a source network device, wherein the handover command is configured to indicate a first time window during which the terminal device can switch from a source cell corresponding to the source network device to a target cell corresponding to a target network device;
an execution unit, configured to perform the cell handover based on the first time window.

51. The terminal device according to claim 50, **characterized in that** the terminal device further comprises:
a first determination unit, configured to determine, in response to an update of a system information block SIB of the source cell and/or the target cell, whether to receive the updated SIB based on time information of the update of the SIB.

52. The terminal device according to claim 51, **characterized in that** the receiving unit is further configured to receive the updated SIB of the target cell based on one of the following:
first information related to a start time point of the first time window;
an update period of the SIB of the target cell.

53. The terminal device according to claim 52, **characterized in that** the first information indicates that the terminal device receives an update notification of the SIB of the target cell at or before the start time point, and the first determination unit is further configured to determine whether to receive the updated SIB of the target cell based on second information;
wherein the second information comprises one or more of the following:
an indication of content of the update of the SIB of the target cell;
transmission time of the updated SIB of the target cell.

54. The terminal device according to claim 53, **characterized in that** the second information comprises the content of the update of the SIB of the target cell, and the receiving unit is further configured to receive the updated SIB of the target cell if the content of the update of the SIB is related to the terminal device.

55. The terminal device according to claim 52, **characterized in that** the first information indicates that the terminal device receives an update notification of the SIB of the target cell, and the receiving unit is further configured to receive the updated SIB of the target cell based on the update notification.

56. The terminal device according to claim 52, **characterized in that** the first determination unit is further configured to determine whether the SIB of the target cell has been updated in each update period;
the receiving unit is further configured to receive the updated SIB of the target cell if there is an update of the SIB of the target cell.

57. The terminal device according to claim 51, **characterized in that** the receiving unit is further configured to not receive the updated SIB of the source cell if the terminal device receives an update notification of the SIB of the source cell after a start time point of the first time window and before a first time point at which the source cell stops serving the terminal device.

58. The terminal device according to any one of claims 50 to 57, **characterized in that** the start time point and an end time point of the first time window are indicated by one of the following: a sequence number of a time-domain unit; an absolute time.

59. The terminal device according to any one of claims 50 to 58, **characterized in that** the terminal device comprises:
a first sending unit, configured to send a handover response to the source network device, wherein the handover response is configured to indicate that the terminal device has received the handover command sent by the source network device.

60. The terminal device according to claim 59, **characterized in that** the terminal device comprises:
a parsing unit, configured to parse the handover command;
the first sending unit is further configured to not send the handover response to the source network device if the handover command instructs the terminal device to perform the handover command immediately;
the first sending unit is further configured to send the handover response to the source network device if the handover command instructs the terminal device not to perform the handover command immediately.

61. The terminal device according to claim 59, **characterized in that** the handover response is carried in one or more of the following messages:
hybrid automatic repeat request HARQ feedback sent by the terminal device;
a radio resource control RRC message generated by the terminal device.

62. The terminal device according to claim 61, **characterized in that** the handover response is carried in the RRC message, the terminal device further comprising:
a generation unit, configured to generate the RRC message based on one or more of the following conditions:
that the terminal device does not establish a connection with the target cell at the start time point of the first time window;
the first time point at which the source cell stops serving the terminal device;
that the handover command instructs the terminal device to send a handover response.

63. The terminal device according to claim 62, **characterized in that** the terminal device comprises:
a second determination unit, configured to determine a first time period based on the first time point at which the source cell stops serving the terminal device, wherein the first time period is a time period between a time point at which the handover command has been parsed and the first time point;
the generation unit is further configured to generate an RRC message carrying the handover response if the first time period is greater than 0 or greater than a second threshold.

64. The terminal device according to claim 59, **characterized in that** the terminal device comprises:
a processing unit, configured to perform security processing on the handover response based on a key corresponding to the source cell.

65. The terminal device according to any one of claims 50 to 64, **characterized in that** the terminal device comprises:
a measuring unit, configured to measure a handover delay based on a second time point and a time point at which the terminal device achieves downlink synchronization with the target cell;
wherein the second time point is one of the following:
the time point at which the terminal device receives the handover command;
the start time point of the first time window;
the first time point at which the source network device stops serving the terminal device.

66. The terminal device according to claim 65, **characterized in that** the second time point for measuring the handover delay is configured via a network.

67. The terminal device according to any one of claims 50 to 66, **characterized in that** the execution unit is further configured to establish a connection with the target cell based on an indication of third information, the third information comprising one of the following:
that the terminal device establishes a connection with the target cell at a third time point within the first time window;
that the terminal device is required to establish at least one connection with the target cell.

68. The terminal device according to claim 67, **characterized in that** the third information comprises whether the terminal device is required to establish at least one connection with the target cell, the third information being indicated by the handover command and/or specified by a protocol.

69. The terminal device according to claim 67 or 68, **characterized in that** the receiving unit is further configured to receive a downlink control command from the target network device, wherein the downlink control command is configured to instruct the terminal device to establish a connection with the target cell in the absence of data transmission.

70. The terminal device according to any one of claims 67 to 69, **characterized in that** the terminal device comprises:
a third determination unit, configured to determine a time point for establishing a connection with the target cell based on the start time point of the first time window or a fourth time point indicated by the handover command;
wherein the fourth time point is a time point at which the target cell stops serving the terminal device.

71. The terminal device according to claim 70, **characterized in that** the handover command is further configured to indicate a second time period ending at the fourth time point, and the execution unit is further configured to establish a connection with the target cell within the second time period if the terminal device has not established a connection with the target cell before the start time point of the second time period.

72. The terminal device according to claim 70, **characterized in that** the handover command is further configured to indicate a third time period starting from the start time point of the first time window, and the execution unit is further configured to establish a connection with the target cell after the third time period if the terminal device has not established a connection with the target cell within the third time period.

73. The terminal device according to claim 72, **characterized in that** the execution unit is further configured to start a timer at the start time point, where a length of the timer is configured to the third time period;
cancel the timer if the terminal device establishes a connection with the target cell within the third time period.

74. The terminal device according to any one of claims 50 to 73, **characterized in that** the terminal device comprises:
a second sending unit, configured to send data and/or messages generated by the terminal device for security verification to the target network device.

75. The terminal device according to claim 74, **characterized in that** the data for security verification is generated at an access stratum of the terminal device.

76. The terminal device according to claim 74, **characterized in that** the data and/or messages for security verification comprise one or more of the following: an RRC message, a non-access stratum NAS message, and data generated by packet data convergence protocol PDCP.

77. The terminal device according to claim 76, **characterized in that** the message for security verification comprises the NAS message, the terminal device further comprising:
an indication unit, configured to instruct the NAS via RRC to generate a NAS message for security verification.

78. The terminal device according to any one of claims 50 to 73, **characterized in that** the receiving unit is further configured to receive a first command sent by the target network device via an RRC message, wherein the first command is securely processed based on a key corresponding to the target cell and the terminal device.

79. A network device, **characterized in that** the network device is a source network device, the source network device comprising:
a sending unit, configured to send a handover command to a terminal device, wherein the handover command is configured to indicate a first time window during which the terminal device can switch from a source cell corresponding to the source network device to a target cell corresponding to a target network device;
wherein the first time window is configured for the terminal device to perform the cell handover.

80. The network device according to claim 79, **characterized in that** the sending unit is further configured to send an update notification of a system information block SIB of the source cell to the terminal device, and time information of the update of the SIB is configured for the terminal device to determine whether to receive the updated SIB.

81. The network device according to claim 79, **characterized in that** the source network device further comprises:
a first receiving unit, configured to receive indication information sent by the target network device, wherein the indication information is configured for the source network device to determine the handover command.

82. The network device according to claim 79, **characterized in that** the source network device further comprises:
a second receiving unit, configured to receive an update notification of the SIB of the target cell sent by the target network device;
the sending unit is further configured to send the update notification of the SIB of the target cell to the terminal device, and time information of the update of the SIB is configured for the terminal device to determine whether to receive the updated SIB.

83. The network device according to any one of claims 79 to 82, **characterized in that** a start time point and an end time point of the first time window are indicated by one of the following: a sequence number of a time-domain unit and an absolute time.

84. The network device according to any one of claims 79 to 83, **characterized in that** the source network device further comprises:
a third receiving unit, configured to receive a handover response sent by the terminal device, wherein the handover response is configured to indicate that the terminal device has received the handover command sent by the source network device.

85. The network device according to claim 84, **characterized in that** the handover response is carried in one or more of the following messages:
hybrid automatic repeat request HARQ feedback sent by the terminal device;
a radio resource control RRC message generated by the terminal device.

86. The network device according to any one of claims 79 to 85, **characterized in that** the handover command comprises third information for instructing the terminal device to establish a connection with the target cell, the third information comprising one of the following:
that the terminal device establishes a connection with the target cell at a third time point within the first time window;
that the terminal device is required to establish at least one connection with the target cell.

87. The network device according to claim 86, **characterized in that** the third information comprises whether the terminal device is required to establish at least one connection with the target cell, the third information being indicated by the target network device and/or specified by a protocol.

88. A network device, **characterized in that** the network device is a target network device, the target network device comprising:
a sending unit, configured to send indication information to a source network device, wherein the indication information is configured for the source network device to determine a handover command, and the handover command is configured to indicate a first time window during which a terminal device may switch from a source cell corresponding to the source network device to a target cell corresponding to the target network device;
wherein the first time window is configured for the terminal device to perform the cell handover.

89. The network device according to claim 88, **characterized in that** the sending unit is further configured to send an update notification of a system information block SIB of the target cell to the source network device, and time information of the update notification of the SIB is configured for the terminal device to determine whether to receive the updated SIB.

90. The network device according to claim 88 or 89, **characterized in that** a start time point and an end time point of the first time window are indicated by one of the following: a sequence number of a time-domain unit and an absolute time.

91. The network device according to any one of claims 88 to 90, **characterized in that** the handover command comprises third information for instructing the terminal device to establish a connection with the target cell, the third information comprising one of the following:
that the terminal device establishes a connection with the target cell at a third time point within the first time window;
that the terminal device is required to establish at least one connection with the target cell.

92. The network device according to claim 91, **characterized in that** the third information comprises whether the terminal device is required to establish at least one connection with the target cell, and the sending unit is further configured to send a downlink control command to the terminal device, wherein the downlink control command is configured to instruct the terminal device to establish a connection with the target cell in the absence of data transmission.

93. The network device according to any one of claims 88 to 92, **characterized in that** the indication information is further configured to indicate a fourth time point, and the fourth time point is configured for the terminal device to determine a time point for establishing a connection with the target cell;
wherein the fourth time point is a time point at which the target cell stops serving the terminal device.

94. The network device according to claim 93, **characterized in that** the indication information is further configured to indicate a second time period ending at the fourth time point and/or a third time period starting from the start time point of the first time window, wherein the second time period and/or the third time period are configured for the terminal device to determine a time point for establishing a connection with the target cell.

95. The network device according to any one of claims 88 to 94, **characterized in that** the target network device further comprises:
a receiving unit, configured to receive data and/or messages for security verification sent by the terminal device, wherein the data and/or messages for security verification are generated by the terminal device.

96. The network device according to claim 95, **characterized in that** the data for security verification is generated at an access stratum of the terminal device.

97. The network device according to claim 95, **characterized in that** the data and/or messages for security verification comprise one or more of the following: a radio resource control RRC message, a non-access stratum NAS message, and data generated by packet data convergence protocol PDCP.

98. The network device according to any one of claims 88 to 94, **characterized in that** the sending unit is further configured to send a first command to the terminal device via an RRC message for indicating the cell handover, wherein the first command is securely processed based on a key corresponding to the target cell and the terminal device.

99. A communication apparatus, **characterized by** comprising a memory and a processor, wherein the memory is configured to store a program, and the processor is configured to execute the program in the memory to perform the method according to any one of claims 1 to 49.

100. An apparatus, **characterized by** comprising a processor that is configured to execute a program from a memory to perform the method according to any one of claims 1 to 49.

101. A chip, **characterized by** comprising a processor that is configured to execute a program from a memory to cause a device equipped with the chip to perform the method according to any one of claims 1 to 49.

102. A computer-readable storage medium, **characterized by** storing a computer program that is configured to cause a computer to perform the method according to any one of claims 1 to 49.

103. A computer program product, **characterized by** comprising a computer program that is configured to cause a computer to perform the method according to any one of claims 1 to 49.

104. A computer program, **characterized in that** the computer program is configured to cause a computer to perform the method according to any one of claims 1 to 49.
